# EUROPEAN PATENT SPECIFICATION

(11) **EP 2 903 125 B1**
(45) Date of publication and mention of the grant of the patent: **05.09.2018**
(21) Application number: 13841938.7
(22) Date of filing: 18.06.2013
(51) Int. Cl.: H02J 7/02, H02M 3/00, H02M 3/337

(54) **UPS AND DC/DC CIRCUIT THEREOF**
USV UND DC/DC-SCHALTUNG DAFÜR
ALIMENTATION SANS COUPURE (UPS) ET SON CIRCUIT CONTINU-CONTINU

(30) Priority: 29.09.2012 CN 201210374995
(43) Date of publication of application: 05.08.2015
(73) Proprietor: Vertiv Tech Co., Ltd., Guangdong 518055 (CN)
(72) Inventor: NI, Tong, Shenzhen Guangdong 518057 (CN); SONG, Miao, Shenzhen Guangdong 518057 (CN)
(74) Representative: Smith, Jeremy Robert
(86) International application number: PCT/CN2013/077378
(87) International publication number: WO 2014/048141

(56) References cited:
- WO-A1-2012/099217
- CN-A- 1 731 612
- CN-A- 103 187 876
- CN-U- 201 918 762
- CN-U- 201 928 040
- CN-Y- 2 893 944
- US-A- 4 916 329
- US-A- 5 602 462
- US-A- 5 978 236
- US-A1- 2008 062 724
- US-A1- 2012 112 547

## Description

### FIELD

The disclosure relates to the field of power supply, and particularly to an uninterrupted power supply (UPS) and a DC/DC circuit thereof.

### BACKGROUND

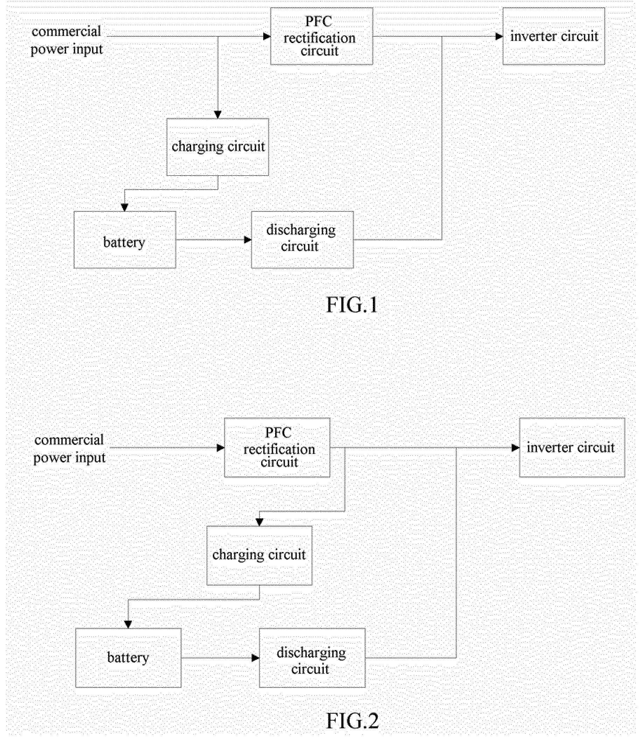

The structure of a conventional uninterrupted power supply (UPS) is shown in Figures 1 and 2, which includes a charging circuit and discharging circuit designed independently. Both of the charging circuit and the discharging circuit are DC/DC circuits. In the commercial power supplying mode, the commercial power is supplied to the charging circuit directly or after being rectified by a power factor correction (PFC) rectification circuit, to charge a battery. In the battery power supplying mode, the battery discharges to supply an input voltage to an inverter circuit through the discharging circuit, so as to supply power to a load. However, as shown in Figures 1 and 2, the conventional charging circuit and discharging circuit are two independent parts of a UPS system in any conventional manner of connecting (coupling) the charging circuit. Such a UPS has disadvantages of large size, high cost and uncentralized key elements, which impacts the product miniaturization.

US 2008/0062724 discloses a bidirectional active power conditioner including a DC side, a bidirectional DC/DC power converter, a DC/AC inverter and an AC side. The DC side electrically connects with a DC source while the AC side electrically connects with a load and an AC source.

### SUMMARY

For solving the technical problem in the conventional art that the UPS has disadvantages of large size, high cost and uncentralized key elements, it is to provide a UPS and a DC/DC circuit thereof, in which the UPS has a small size, a low cost and centralized key elements, thereby promoting product miniaturization.

The invention is defined by the features of device claim 1. The dependent device claims recite advantageous embodiments of the invention. The technical solution of the disclosure for solving the technical problems is to construct a DC/DC circuit of an uninterrupted power supply, wherein the DC/DC circuit is a bidirectional DC/DC circuit connected between a bus and a battery;
in a charging mode, the bidirectional DC/DC circuit obtains power from the bus and charges the battery; and in a discharging mode, the bidirectional DC/DC circuit obtains power from the battery and supplies the bus with power.

In the DC/DC circuit of the uninterrupted power supply according to the disclosure, the bidirectional DC/DC circuit includes:
an isolation transformer;
a first selection unit, a first chopper unit and a first rectification unit which are arranged on a primary side of the isolation transformer; and
a second selection unit, a second chopper unit and a second rectification unit which are arranged on a secondary side of the isolation transformer; and
wherein in the charging mode, the second selection unit selects the second chopper unit to operate and the first selection unit selects the first rectification unit to operate; and in the discharging mode, the first selection unit selects the first chopper unit to operate, and the second selection unit selects the second rectification unit to operate.

In the DC/DC circuit of the uninterrupted power supply according to the disclosure, the primary side and/or the secondary side of the isolation transformer includes a plurality of controllable taps, the first chopper unit and the first rectification unit are connected to different controllable taps on the primary side of the isolation transformer, respectively, and/or the second chopper unit and the second rectification unit are connected to different controllable taps on the secondary side of the isolation transformer, respectively.

In the DC/DC circuit of the uninterrupted power supply according to the disclosure, each of the first chopper unit and the second chopper unit is a push-pull chopper unit, a full bridge chopper unit or a half bridge chopper unit.

In the DC/DC circuit of the uninterrupted power supply according to the disclosure, each of the first rectification unit and the second rectification unit is a full bridge rectification unit, a full wave rectification unit, a voltage-doubler rectification unit or a current-doubler rectification unit.

In the DC/DC circuit of the uninterrupted power supply according to the disclosure, each of the first selection unit and the second selection unit is a relay and/or a solid-state switch.

In the DC/DC circuit of the uninterrupted power supply according to the disclosure, in a case that the first selection unit and the second selection unit are relays, the relay includes at least one single-pole single-throw relay, single-pole double-throw relay or double-pole double-throw relay.

In the DC/DC circuit of the uninterrupted power supply according to the disclosure, the bidirectional DC/DC circuit further includes a current transformer or a Hall sensor arranged on the primary side and/or the secondary side of the isolation transformer, and the current transformer or the Hall sensor is configured to sample a current on the primary side and/or the secondary side of the isolation transformer.

In the DC/DC circuit of the uninterrupted power supply according to the disclosure, the bidirectional DC/DC circuit further includes filter inductors arranged on the primary side and the secondary side of the isolation transformer.

In the DC/DC circuit of the uninterrupted power supply according to the disclosure, the first selection unit includes a single-pole single-throw first relay, the second selection unit includes a single-pole double-throw second relay, the first chopper unit includes a first switch transistor and a second switch transistor, the second chopper unit includes a third switch transistor and a fourth switch transistor, the first rectification unit includes a first diode and a second diode, the second rectification unit includes a third diode and a fourth diode, and the bidirectional DC/DC circuit further includes a first filter inductor arranged on the primary side of the isolation transformer, a second filter inductor arranged on the secondary side of the isolation transformer, and a current transformer arranged on the primary side of the isolation transformer, and
a positive terminal of the battery is connected to a second tap, i.e., a central tap, on the primary side of the isolation transformer, a negative terminal of the battery is connected to a second terminal of the first switch transistor and a second terminal of the second switch transistor via the first relay, a first terminal of the first switch transistor and a first terminal of the second switch transistor are respectively connected to a first tap, i.e., a dotted terminal, and a third tap, i.e., an undotted terminal, on the primary side of the isolation transformer, the first tap and the third tap on the primary side of the isolation transformer are connected to a cathode of the first diode and a cathode of the second diode via the current transformer, respectively, and both of an anode of the first diode and an anode of the second diode are connected to the negative terminal of the battery via the first filter inductor; and a third tap, i.e., a central tap, on the secondary side of the isolation transformer is connected to a positive bus, a first tap and a fifth tap on the secondary side of the isolation transformer are connected to a cathode of the third diode and a cathode of the fourth diode, respectively, both of an anode of the third diode and an anode of the fourth diode are connected to a first selection contact of the second relay via the second filter inductor, a second tap and a fourth tap on the secondary side of the isolation transformer are connected to a first terminal of the third switch transistor and a first terminal of the fourth switch transistor, respectively, both of a second terminal of the third switch transistor and a second terminal of the fourth switch transistor are connected to a second selection contact of the second relay, and a moving contact of the second relay is connected to a negative bus.

In the DC/DC circuit of the uninterrupted power supply according to the disclosure, the first selection unit includes a single-pole single-throw first relay and third relay, the second selection unit includes a single-pole double-throw second relay, the first chopper unit includes a first switch transistor and a second switch transistor, the second chopper unit includes a third switch transistor and a fourth switch transistor, the first rectification unit includes a first diode and a second diode, the second rectification unit includes a third diode and a fourth diode, and the bidirectional DC/DC circuit further includes a first filter inductor arranged on the primary side of the isolation transformer, a second filter inductor arranged on the secondary side of the isolation transformer, and a current transformer arranged on the primary side of the isolation transformer, and
a positive terminal of the battery is connected to a second tap, i.e., a central tap, on the primary side of the isolation transformer, a negative terminal of the battery is connected to a second terminal of the first switch transistor and a second terminal of the second switch transistor, a first terminal of the first switch transistor is connected to a first tap, i.e., a dotted terminal, on the primary side of the isolation transformer via the first relay, a first terminal of the second switch transistor is connected to a third tap, i.e., an undotted terminal, on the primary side of the isolation transformer via the third relay, the first tap and the third tap on the primary side of the isolation transformer are connected to a cathode of the first diode and a cathode of the second diode via the current transformer, respectively, and both of an anode of the first diode and an anode of the second diode are connected to the negative terminal of the battery via the first filter inductor; and a third tap, i.e., a central tap, on the secondary side of the isolation transformer is connected to a positive bus, a first tap and a fifth tap on the secondary side of the isolation transformer are connected to a cathode of the third diode and a cathode of the fourth diode, respectively, both of an anode of the third diode and an anode of the fourth diode are connected to a first selection contact of the second relay via the second filter inductor, a second tap and a fourth tap on the secondary side of the isolation transformer are connected to a first terminal of the third switch transistor and a first terminal of the fourth switch transistor, respectively, both of a second terminal of the third switch transistor and a second terminal of the fourth switch transistor are connected to a second selection contact of the second relay, and a moving contact of the second relay is connected to a negative bus.

It is also to construct a UPS according to the disclosure, which includes any one of the DC/DC circuits described above.

With the technical solution of the disclosure, not only a charging function but also a discharging function can be achieved in the UPS, since the charging circuit and the discharging circuit are integrated into one DC/DC circuit in the UPS, which is a bidirectional DC/DC circuit. Therefore, the UPS can have a reduced size, a lowered cost and centralized key elements, thereby promoting the product miniaturization.

### BRIEF DESCRIPTION OF THE DRAWINGS

The disclosure will be further described in conjunction with accompany drawings and embodiments hereinafter. In the accompany drawings:
Figure 1 is a logic diagram of a first kind of UPS in the conventional art;
Figure 2 is a logic diagram of a second kind of UPS in the conventional art;
Figure 3 is a logic diagram of a UPS according to a first embodiment of the disclosure;
Figure 4 is a circuit diagram of a bidirectional DC/DC circuit of the UPS according to a first embodiment of the disclosure;
Figure 5 is a circuit diagram of a bidirectional DC/DC circuit of the UPS according to a second embodiment of the disclosure;
Figure 6 is a circuit diagram of a bidirectional DC/DC circuit of the UPS according to a third embodiment of the disclosure;
Figure 7 is a circuit diagram of a bidirectional DC/DC circuit of the UPS according to a fourth embodiment of the disclosure;
Figure 8 is a circuit diagram of a bidirectional DC/DC circuit of the UPS according to a fifth embodiment of the disclosure;
Figure 9 is a circuit diagram of a bidirectional DC/DC circuit of the UPS according to a sixth embodiment of the disclosure;
Figure 10 is a circuit diagram of a bidirectional DC/DC circuit of the UPS according to a seventh embodiment of the disclosure;
Figure 11 is a circuit diagram of a bidirectional DC/DC circuit of the UPS according to an eighth embodiment of the disclosure;
Figure 12 is a circuit diagram of a bidirectional DC/DC circuit of the UPS according to a ninth embodiment of the disclosure;
Figure 13 is a circuit diagram of a bidirectional DC/DC circuit of the UPS according to a tenth embodiment of the disclosure; and
Figure 14 is a circuit diagram of a bidirectional DC/DC circuit of the UPS according to an eleventh embodiment of the disclosure.

### DETAILED DESCRIPTION

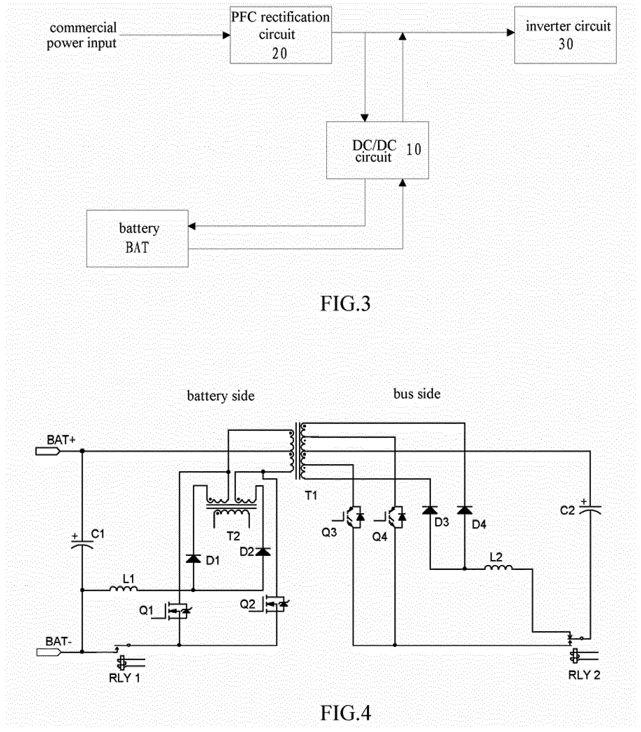

Figure 3 is a logic diagram of a UPS according to a first embodiment of the disclosure. The UPS includes a PFC rectification circuit 20, an inverter circuit 30, a battery BAT and a DC/DC circuit 10. The PFC rectification circuit 20 is configured to perform PFC rectification on a voltage of the commercial power to supply power to the bus, in the case that the commercial power supply is normal. The inverter circuit 30 is configured to perform an inversion on a voltage of the DC bus to supply power to a load. In the following, the DC/DC circuit 10 will be mainly described. The DC/DC circuit 10 is connected between the bus and the battery BAT, and is a bidirectional DC/DC circuit. In a charging mode (in the case that the commercial power supply is normal), the bidirectional DC/DC circuit 10 obtains power from the bus and charges the battery BAT. In a discharging mode (in the case that the commercial power supply is abnormal), the bidirectional DC/DC circuit 10 obtains power from the battery BAT and supplies power to the bus.

With this technical solution, not only a charging function but also a discharging function can be achieved in the UPS, since the charging circuit and the discharging circuit are integrated into one DC/DC circuit which is a bidirectional DC/DC circuit. Therefore, the UPS can have a reduced size, a lowered cost and centralized key elements, thereby promoting the product miniaturization.

In a logic diagram showing a preferable embodiment of a bidirectional DC/DC circuit of the UPS according to the disclosure, the bidirectional DC/DC circuit includes an isolation transformer, a first selection unit, a first chopper unit, a first rectification unit, a second selection unit, a second chopper unit, and a second rectification unit. The first selection unit, the first chopper unit and the first rectification unit are arranged on a primary side (i.e., a battery side) of the isolation transformer. The second selection unit, the second chopper unit and the second rectification unit are arranged on a secondary side (i.e., a bus side) of the isolation transformer. In addition, in the charging mode, the second selection unit selects the second chopper unit to operate, and the first selection unit selects the first rectification unit to operate; and in the discharging mode, the first selection unit selects the first chopper unit to operate, and the second selection unit selects the second rectification unit to operate. With this technical solution, in addition to enabling the UPS to have advantages of small size, low cost and centralized key elements, only the isolation transformer is shared in charging and discharging, the first chopper unit used in the discharging mode and the first rectification unit used in the charging mode are completely independent and the second chopper unit used in the charging mode and the second rectification unit used in the discharging mode are completely independent. Therefore, for each of the battery side and the bus side, respective suitable devices may be effectively selected according to the rectification requirement and a chopping requirement by separating the rectification units from the chopper units, thereby avoiding the difficulty in device selection in practical applications, which is caused by an improved level of withstanding voltage of the device due to one of the rectification requirement and the chopping requirement (the withstanding voltage and reverse recovery capability).

In the bidirectional DC/DC circuit, preferably, one or both of the primary side and the secondary side of the isolation transformer include a plurality of controllable taps. In a case that there are a plurality of controllable taps on the primary side of the isolation transformer, the first chopper unit and the first rectification unit are connected to different controllable taps on the primary side of the isolation transformer, respectively. In a case that there are a plurality of controllable taps on the secondary side of the isolation transformer, the second chopper unit and the second rectification unit are connected to different controllable taps on the secondary side of the isolation transformer, respectively. Practically, it may also be possible for both of the primary side and the secondary side of the isolation transformer to have a plurality of different controllable taps. In this way, the turns ratio between the primary side and the secondary side of the isolation transformer may be changed by selecting the controllable taps on the primary side and/or the secondary side of the isolation transformer, thereby adjusting a charging voltage or a discharging voltage. In addition, each of the first chopper unit and the second chopper unit may be a push-pull chopper unit, a full bridge chopper unit or a half bridge chopper unit; and each of the first rectification unit and the second rectification unit may be a full bridge rectification unit, a full wave rectification unit, a voltage-doubler rectification unit or a current-doubler rectification unit. Each of the first selection unit and the second selection unit may be a relay, a solid-state switch or the like. The relay may include at least one single-pole single-throw relay, single-pole double-throw relay or double-pole double-throw relay. Furthermore, the bidirectional DC/DC circuit may further include a current transformer or a Hall sensor arranged on the primary side and/or the secondary side of the isolation transformer, which is configured to sample a current on the primary side and/or the secondary side of the isolation transformer.

Figure 4 is a circuit diagram of the bidirectional DC/DC circuit of the UPS according to a first embodiment of the disclosure. On the battery side, the first selection unit is a relay RLY1, a single-pole single-throw relay. In the first chopper unit, a positive terminal BAT+ of the battery is connected to a second (central) tap on the primary side of the isolation transformer T1, a negative terminal BAT- of the battery is connected to a source of a mental oxide semiconductor (MOS) transistor Q1 and a source of a MOS transistor Q2 via the relay RLY1, and a drain of the MOS transistor Q1 and a drain of the MOS transistor Q2 are connected to a first tap (a dotted terminal) and a third tap (an undotted terminal) on the primary side of the isolation transformer T1, respectively. In the first rectification unit, the first tap and the third tap on the primary side of the isolation transformer T1 are connected to a cathode of a diode D1 and a cathode of a diode D2 via a current transformer T2, respectively, and both of an anode of the diode D1 and an anode of the diode D2 are connected to the negative terminal BAT- of the battery via a filter inductor L1. In addition, a voltage stabilizing capacitor C1 is connected in parallel between the positive terminal BAT+ and the negative terminal BAT- of the battery. On the bus side, there are a total of 5 taps on the secondary side of the isolation transformer T1, in which a third (central) tap is connected to an anode of a bus capacitor C2. The second selection unit is a relay RLY2, a single-pole double-throw relay. In the second rectification unit, a first tap and a fifth tap on the secondary side of the isolation transformer T1 are connected to a cathode of a diode D3 and a cathode of a diode D4, respectively, and both of an anode of the diode D3 and an anode of the diode D4 are connected to a first selection contact of the relay RLY2 via a filter inductor L2. In the second chopper unit, a second tap and a fourth tap on the secondary side of the isolation transformer T1 are connected to a collector of an insulated gate bipolar transistor (IGBT) Q3 and a collector of an IGBT Q4, respectively, and both of an emitter of the IGBT Q3 and an emitter of the IGBT Q4 are connected to a second selection contact of the relay RLY2. A moving contact of the relay RLY2 is connected to a cathode of the bus capacitor C2.

The operating principle of the bidirectional DC/DC circuit is described as follows. Both the first chopper unit on the battery side and the second chopper unit on the bus side are push-pull chopper units, and both the first rectification unit on the battery side and the second rectification unit on the bus side are full wave rectification units. In the charging mode, at first, the moving contact of the relay RLY2 is controlled to be connected to the second selection contact, and the relay RLY1 is controlled to be disconnected. In this case, the second chopper unit and the first rectification unit operate. Then, the IGBT Q3 and the IGBT Q4 are controlled to perform high frequency chopping to convert DC power obtained from the bus to high frequency pulses whose energy is delivered to the battery side via the isolation transformer T1, is then rectified by the first rectification unit formed of the diodes D1 and D2, and is used to charge the battery after being filtered by the filter inductor L1. In the discharging mode, at first, the relay RLY1 is controlled to be closed and the moving contact of the relay RLY2 is controlled to be connected to the first selection contact. In this case, the first chopper unit and the second rectification unit operate. Then, the MOS transistor Q1 and the MOS transistor Q2 are controlled to perform the high frequency chopping to convert the energy of the battery to high frequency pulses which are delivered to the bus side via the isolation transformer T1, are rectified by the second rectification unit formed of the diodes D3 and D4, and then supply power to the bus.

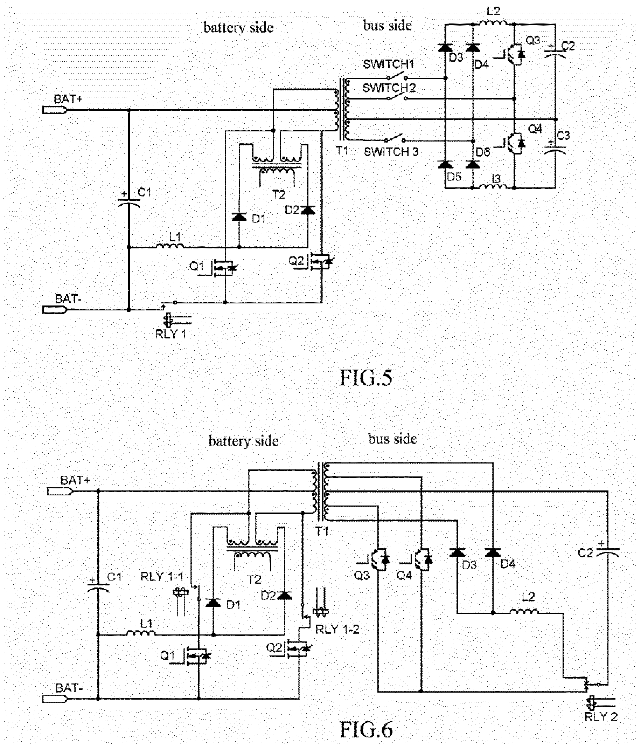

Figure 5 is a circuit diagram of the bidirectional DC/DC circuit of the UPS according to a second embodiment of the disclosure. In the embodiment, the circuit structure of the primary side of the isolation transformer T1 is the same as that in the bidirectional DC/DC circuit shown in Figure 4, and it will not be repeated here. The circuit structure of only the secondary side of the isolation transformer T1 is illustrated in the following. In the embodiment, there is a double bus structure on the bus side, the second chopper unit is a half bridge chopper unit, and the second rectification unit is a full bridge rectification unit. On the bus side, there are a total of 4 taps on the secondary side of the isolation transformer T1, and a third tap is connected to a cathode of a bus capacitor C2 and an anode of a bus capacitor C3. The second selection unit includes three solid-state switches SWITCH 1, SWITCH2 and SWITCH3. In the second rectification unit, diodes D3, D4, D5 and D6 form a full bridge rectifier. Two input terminals of the full bridge rectifier are connected to a first and fourth taps on the secondary side of the isolation transformer T1 via the solid-state switches SWITCH1 and SWITCH3, a first output terminal of the full bridge rectifier is connected to an anode of the bus capacitor C2 via a filter inductor L2, and a second output terminal of the full bridge rectifier is connected to a cathode of the bus capacitor C3 via a filter inductor L3. In the second chopper unit, a collector of an IGBT Q3 is connected to the anode of the bus capacitor C2, an emitter of an IGBT Q4 is connected to the cathode of the bus capacitor C3, and both of an emitter of the IGBT Q3 and a collector of the IGBT Q4 are connected to a second tap on the secondary side of the isolation transformer T1 via the solid-state switch SWITCH2.

The operating principle of the bidirectional DC/DC circuit is illustrated as follows. In the charging mode, at first, the solid-state switches SWITCH1 and SWITCH3 are controlled to be turned off, the solid-state switch SWITCH2 is controlled to be turned on, and the relay RLY1 is controlled to be opened. In this case, the second chopper unit and the first rectification unit operate. Then, the IGBTs Q3 and Q4 are controlled to perform high frequency chopping to convert the DC power obtained from the bus to high frequency pulses, whose energy is delivered to the battery side via the isolation transformer T1, is then rectified by the first rectification unit formed of the diodes D1 and D2, and is used to charge the battery after being filtered by the filter inductor L1. In the discharging mode, at first, the relay RLY1 is controlled to be closed, the solid-state switches SWITCH1 and SWITCH3 are controlled to be turned on, and the solid-state switch SWITCH2 is controlled to be turned off. In this case, the first chopper unit and the second rectification unit operate. Then, the MOS transistors Q1 and Q2 are controlled to perform the high frequency chopping to convert the energy of the battery to high frequency pulses which are delivered to the bus side via the isolation transformer T1, are rectified by the second rectification unit formed of the diodes D3, D4, D5 and D6, and then supply power to the bus.

Figure 6 is a circuit diagram of the bidirectional DC/DC circuit of the UPS according to a third embodiment of the disclosure. In the embodiment, the circuit structure of only the first selection unit and the first chopper unit is different from that in the bidirectional DC/DC circuit shown in Figure 4. The first selection unit includes two relays RLY1-1 and RLY1-2, two single-pole single-throw relays. In the first chopper unit, both of the source of the MOS transistor Q1 and the source of the MOS transistor Q2 are connected to the negative terminal BAT- of the battery, the drain of the MOS transistor Q1 is connected to the first tap on the primary side of the isolation transformer T1 via the relay RLY1-1, and the drain of the MOS transistor Q2 is connected to the third tap on the primary side of the isolation transformer T1 via the relay RLY1-2.

The working process of the bidirectional DC/DC circuit in this embodiment is the same as that of the bidirectional DC/DC circuit in the first embodiment, except for the following. For the bidirectional DC/DC circuit in this embodiment, in the charging mode, the moving contact of the relay RLY2 is controlled to be connected to the second selection contact, and the relays RLY1-1 and RLY1-2 are controlled to be opened. In this case, the second chopper unit and the first rectification unit operate. In the discharging mode according to this embodiment, at first, the relays RLY1-1 and RLY1-2 are controlled to be closed, and the moving contact of the relay RLY2 is controlled to be connected to the first selection contact. In this case, the first chopper unit and the second rectification unit operate.

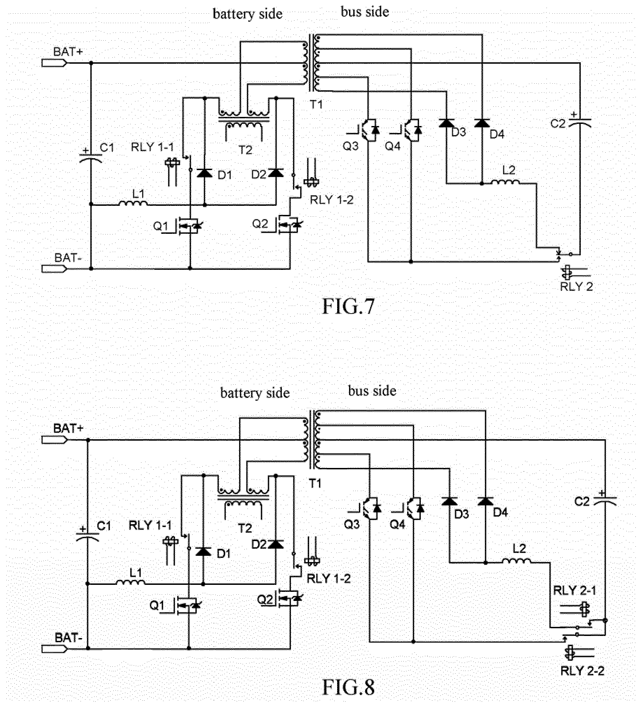

Figure 7 is a circuit diagram of the bidirectional DC/DC circuit of the UPS according to a fourth embodiment of the disclosure. The bidirectional DC/DC circuit in this embodiment differs from that shown in Figure 6 only in that: both of one terminal of the relay RLY1-1 and the cathode of the diode D1 are connected to one terminal of the current transformer T2, and both of one terminal of the relay RLY1-2 and the cathode of the diode D2 are connected to the other terminal of the current transformer T2. In the bidirectional DC/DC circuit of this embodiment, the current transformer T2 can sample the battery current not only in the charging mode but also in the discharging mode.

Figure 8 is a circuit diagram of the bidirectional DC/DC circuit of the UPS according to a fifth embodiment of the disclosure. The bidirectional DC/DC circuit in this embodiment differs from that shown in Figure 7 only in that: the single-pole double-throw relay RLY2 is replaced with two single-pole single-throw relays RLY2-1 and RLY2-2, one terminal of the relay RLY2-1 is connected to the filter inductor L2, one terminal of the relay RLY2-2 is connected to the IGBTs Q3 and Q4, and both of the other terminal of the relay RLY2-1 and the other terminal of the relay RLY2-2 are connected to the cathode of the bus capacitor C2.

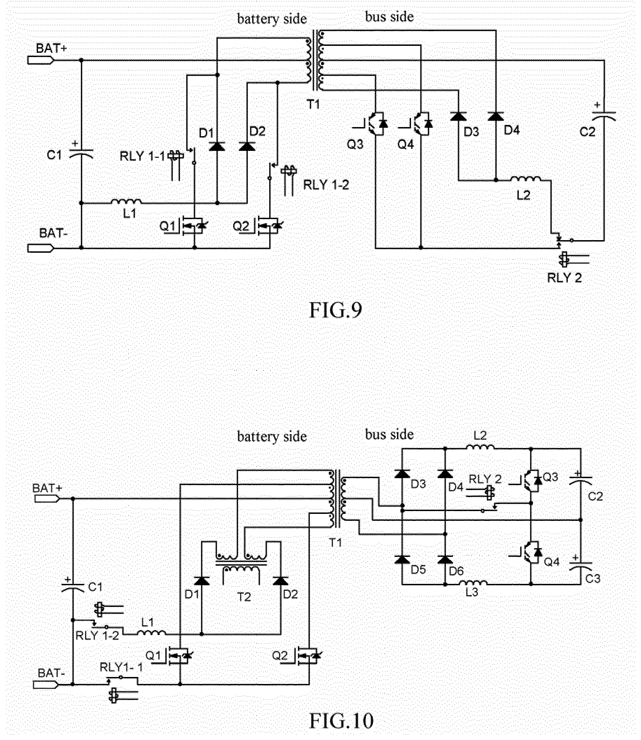

Figure 9 is a circuit diagram of the bidirectional DC/DC circuit of the UPS according to a sixth embodiment of the disclosure. The bidirectional DC/DC circuit in this embodiment differs from that shown in Figure 7 only in that: the current transformer is omitted, that is, both of the cathode of the diode D1 and one terminal of the relay RLY1-1 are connected to the first tap on the primary side of the isolation transformer T1, and both of the cathode of the diode D2 and one terminal of the relay RLY1-2 are connected to the third tap on the primary side of the isolation transformer T1. In addition, it should be noted that, the current transformer may also be arranged on the secondary side of the isolation transformer T1.

The above embodiments are illustrated by taking a case that there are a plurality of controllable taps on the secondary side of the isolation transformer. Practically, there may also be a plurality of controllable taps on the primary side of the isolation transformer. For example, as shown in Figure 10, the circuit diagram of the bidirectional DC/DC circuit of the UPS according to the seventh embodiment of the disclosure, on the battery side, there are a total of 5 taps on the primary side of the isolation transformer T1, in which a third (central) tap is connected to the positive terminal BAT+ of the battery. The first selection unit includes relays RLY1-1 and RLY1-2, single-pole single-throw relays. In the first chopper unit, the negative terminal BAT- of the battery is connected to a source of a MOS transistor Q1 and a source of a MOS transistor Q2 via the relay RLY1-1, and a drain of the MOS transistor Q1 and a drain of the MOS transistor Q2 are connected to a second tap and a fourth tap on the primary side of the isolation transformer T1, respectively. In the first rectification unit, the negative terminal BAT- of the battery is connected to an anode of a diode D1 and an anode of a diode D2, respectively via the relay RLY1-2 and the filter inductor L1, and a cathode of the diode D1 and a cathode of the diode D2 are connected to a first tap and a fifth tap on the primary side of the isolation transformer T1 via a current transformer T2, respectively. In addition, a voltage stabilizing capacitor C1 is connected in parallel between the positive terminal BAT+ of the battery and the negative terminal BAT- of the battery. On the bus side, the second selection unit includes the relay RLY2, a single-pole single-throw relay. In the second rectification unit, the diodes D3, D4, D5 and D6 form a full bridge diode rectifier, two input terminals of the full bridge diode rectifier are respectively connected to a first tap (a dotted terminal) and a third tap (an undotted terminal) on the secondary side of the isolation transformer T1, a first output terminal of the full bridge diode rectifier is connected to an anode of a bus capacitor C2 via a filter inductor L2, and a second output terminal of the full bridge diode rectifier is connected to a cathode of a bus capacitor C3 via a filter inductor L3. In the second chopper unit, a collector of an IGBT Q3 is connected to the anode of the bus capacitor C2, an emitter of an IGBT Q4 is connected to the cathode of the bus capacitor C3, both of an emitter of the IGBT Q3 and a collector of the IGBT Q4 are connected to a firs tap on the secondary side of the isolation transformer T1 via the relay RLY2, and a second (central) tap of the isolation transformer T1 is connected to a cathode of the bus capacitor C2 and an anode of the bus capacitor C3.

The operating principle of the bidirectional DC/DC circuit in the embodiment is similar to that in the second embodiment shown in Figure 5, except that: for the bidirectional DC/DC circuit in the embodiment, the relay RLY2 and the relay RLY1-2 are closed and the relay RLY1-1 is opened in the charging node, and the relay RLY1-1 is closed and the relay RLY1-2 and the relay RLY2 are opened in the discharging mode.

In the disclosure, the current transformer is configured to detect the charging current on the primary side of the isolation transformer.

It should be noted that, in the bidirectional DC/DC circuits shown in Figures 4 to 8 and Figure 10, the current transformer T2 may not be included or may be replaced with a Hall sensor. In the case that there is no current transformer T2, the taps on the primary side of the isolation transformer are directly connected to the cathodes of the first and second diodes. Specifically, in Figures 4 to 8, the first tap on the primary side of the isolation transformer is connected to the cathode of the first diode and the third tap on the primary side of the isolation transformer is connected to the cathode of the second diode. In Figure 10, the first tap on the primary side of the isolation transformer is connected to the cathode of the first diode, and the fifth tap on the primary side of the isolation transformer is connected to the cathode of the second diode. In fact, the current transformer is connected to an AC side of the first rectification unit. In the case that the current transformer T2 is replaced with a Hall sensor, the Hall sensor is arranged on the AC side or a DC side of the first rectification unit.

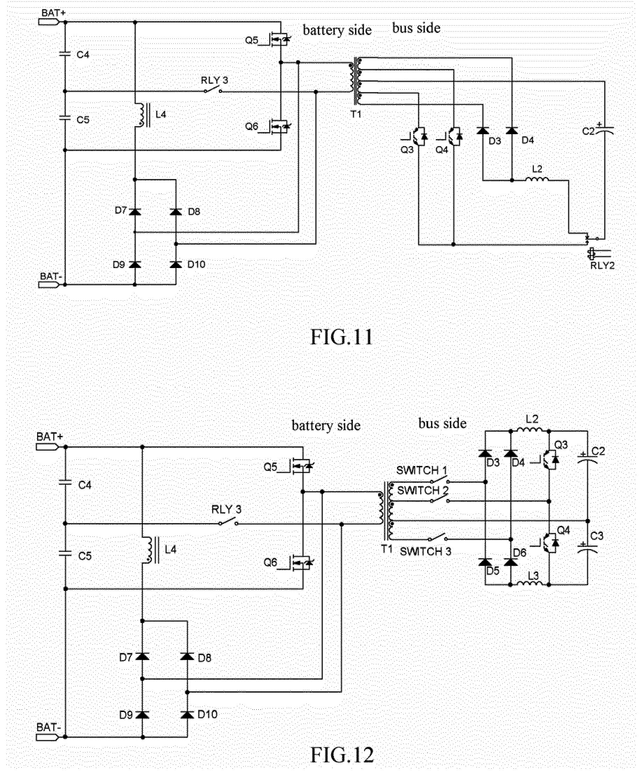

Figure 11 is a circuit diagram of the bidirectional DC/DC circuit of the UPS according to an eighth embodiment of the disclosure. In the embodiment, the bidirectional DC/DC circuit includes an isolation transformer T1, a first selection unit, a first chopper unit, a first rectification unit, a second selection unit, a second chopper unit and a second rectification unit. The bidirectional DC/DC circuit further includes a filter inductor L4 arranged on a primary side of the isolation transformer T 1.

There are two taps on the primary side of the isolation transformer T1, and five taps on a secondary side of the isolation transformer T1. The first selection unit, the first chopper unit and the first rectification unit are arranged on the primary side (i.e., the battery side) of the isolation transformer T1; and the second selection unit, the second chopper unit and the second rectification unit are arranged on the secondary side (i.e., the bus side) of the isolation transformer T1.

The circuit structure of the secondary side of the isolation transformer T1 in the embodiment is the same as that in the bidirectional DC/DC circuit shown in Figure 4, and it will not be repeated here. The circuit structure of only the primary side of the isolation transformer T1 is illustrated in the following.

The first selection unit is a relay RLY3, a single-pole single-throw relay. The first chopper unit is a half bridge chopper unit including a MOS transistors Q5 and Q6. The first rectification unit is a full bridge rectification unit including diodes D7, D8, D9 and D10.

In the first chopper unit, the MOS transistors Q5 and Q6 are connected in series between a positive terminal BAT+ and a negative terminal BAT- of the battery, and a common node between the MOS transistors Q5 and Q6 is connected with a first tap (a dotted terminal) on the primary side of the isolation transformer T1. In the first rectification unit, the positive terminal BAT+ of the battery is also connected to a cathode of the diode D7 and a cathode of the diode D8 via the filter inductor L4, an anode of the diode D7 is connected to a cathode of the diode D9, an anode of the diode D8 is connected to a cathode of the diode D10, an anode of the diode D9 and an anode of the diode D10 are connected to the negative terminal BAT- of the battery, and the anode of the diode D7 and the anode of the diode D8 are connected to the first tap (the dotted terminal) and the second tap (an undotted terminal) on the primary side of the isolation transformer T1, respectively. In addition, a series circuit formed of voltage stabilizing capacitors C4 and C5 is connected in parallel with the series circuit of the MOS transistors Q5 and Q6, and a common node between the voltage stabilizing capacitors C4 and C5 is connected to the second tap (the undotted terminal) on the primary side of the isolation transformer T1 via the relay RLY3.

The operating principle of the bidirectional DC/DC circuit is illustrated as follows. In the charging mode, at first, the moving contact of the relay RLY2 is controlled to be connected to the second selection contact and the relay RLY3 is controlled to be opened. In this case, the second chopper unit and the first rectification unit operate. Then, the IGBTs Q3 and Q4 are controlled to perform high frequency chopping to convert the DC power obtained from the bus to high frequency pulses whose energy is delivered to the battery side via the isolation transformer T1, is then rectified by the first rectification unit formed of the diodes D7, D8, D9 and D10, and is used to charge the battery after being filtered by the filter inductor L4. In the discharging mode, at first, the moving contact of the relay RLY2 is controlled to be connected to the second selection contact and the relay RLY3 is controlled to be closed. In this case, the first chopper unit and the second rectification unit operate. Then, the MOS transistors Q5 and Q6 are controlled to perform the high frequency chopping to convert the energy of the battery to high frequency pulses which are delivered to the bus side via the isolation transformer T1, are rectified by the second rectification unit formed of the diodes D3 and D4, and then supply power to the bus.

It should be noted that, the IGBT Q3, the IGBT Q4, the MOS transistor Q5 and the MOS transistor Q6 in the embodiment may also be switch transistors in other forms.

Figure 12 is a circuit diagram of the bidirectional DC/DC circuit of the UPS according to a ninth embodiment of the disclosure. In the embodiment, the bidirectional DC/DC circuit includes an isolation transformer T1, a first selection unit, a first chopper unit, a first rectification unit, a second selection unit, a second chopper unit and a second rectification unit. The bidirectional DC/DC circuit further includes a filter inductor L4 arranged on a primary side of the isolation transformer T 1.

There are two taps on the primary side of the isolation transformer T1, and four taps on a secondary side of the isolation transformer T1. The first selection unit, the first chopper unit and the first rectification unit are arranged on the primary side (i.e., the battery side) of the isolation transformer T1; and the second selection unit, the second chopper unit and the second rectification unit are arranged on the secondary side (i.e., the bus side) of the isolation transformer T1.

The circuit structure of the primary side of the isolation transformer T1 in the embodiment is the same as that in the bidirectional DC/DC circuit shown in Figure 11, and the circuit structure of the secondary side of the isolation transformer T1 in the embodiment is the same as that in the bidirectional DC/DC circuit shown in Figure 5. Therefore, the circuit structure of the embodiment will not be described in detail here, and the circuit structures shown in Figures 5 and 11 may be referred to for details.

The working process of the bidirectional DC/DC circuit in the embodiment differs from that of the bidirectional DC/DC circuit shown in Figure 11 only in that: the controlling on the relay RLY2 in Figure 11 is replaced with the controlling on solid-state switches SWITCH1, SWITCH2 and SWITCH3. Specifically, in the charging mode, the solid-state switch SWITCH2 is controlled to be turned on, and the solid-state switches SWITCH1 and SWITCH3 are controlled to be turned off. In this case, the second chopper unit formed of the IGBTs Q3 and Q4 operates. In the discharging mode, the solid-state switches SWITCH1 and SWITCH3 are controlled to be turned on, and the solid-state switch SWITCH2 is controlled to be turned off. In this case, the second rectification unit formed of the diodes D3, D4, D5 and D6 operates.

It should be noted that, the IGBT Q3, the IGBT Q4, the MOS transistor Q5 and the MOS transistor Q6 in the embodiment may also be switch transistors in other forms.

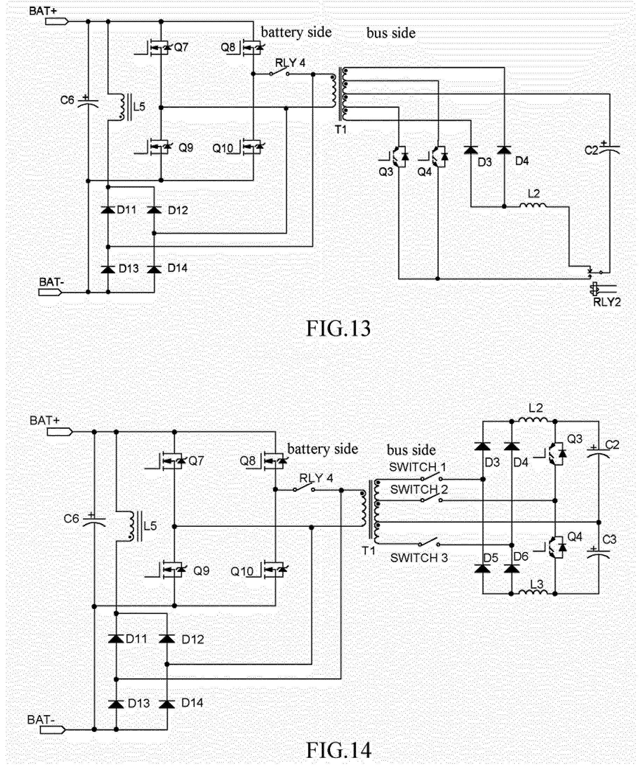

Figure 13 is a circuit diagram of a bidirectional DC/DC circuit of the UPS according to a tenth embodiment of the disclosure. In the embodiment, the bidirectional DC/DC circuit includes an isolation transformer T1, a first selection unit, a first chopper unit, a first rectification unit, a second selection unit, a second chopper unit and a second rectification unit. The bidirectional DC/DC circuit further includes a filter inductor L5 arranged on a primary side of the isolation transformer T1.

There are two taps on the primary side of the isolation transformer T1, and five taps on a secondary side of the isolation transformer T1. The first selection unit, the first chopper unit and the first rectification unit are arranged on the primary side (i.e., the battery side) of the isolation transformer T1; and the second selection unit, the second chopper unit and the second rectification unit are arranged on the secondary side (i.e., the bus side) of the isolation transformer T1.

The circuit structure of the secondary side of the isolation transformer T1 in the embodiment is the same as that in the bidirectional DC/DC circuit shown in Figure 4, and it will not be repeated here. The circuit structure of only the primary side of the isolation transformer T1 is illustrated in the following.

The first selection unit is a relay RLY4, a single-pole single-throw relay. The first chopper unit is a full bridge chopper unit including MOS transistors Q7, Q8, Q9 and Q10. The first rectification unit includes diodes D11, D12, D13 and D14.

In the first chopper unit, the MOS transistor Q7 is connected in series with the MOS transistor Q9, the MOS transistor Q8 is connected in series with the MOS transistor Q10, the series circuit formed of the MOS transistors Q7 and Q9 and the series circuit formed of the MOS transistors Q8 and Q10 are connected between a positive terminal BAT+ and a negative terminal BAT- of the battery, a common node between the MOS transistors Q8 and Q10 is connected to a first tap (a dotted terminal) on the primary side of the isolation transformer T1 via the relay RLY4, and a common node between the MOS transistors Q7 and Q9 is connected to a second tap (an undotted terminal) on the primary side of the isolation transformer T1. In the first rectification unit, the positive terminal BAT+ of the battery is connected to a cathode of the diode D11 and a cathode of the diode D12 via the filter inductor L5, an anode of the diode D11 is connected to a cathode of the diode D13, an anode of the diode D12 is connected to a cathode of the diode D14, an anode of the diode D13 and an anode of the diode D14 are connected to the negative terminal BAT- of the battery, and the anode of the diode D11 and the anode of the diode D12 are connected to the first tap (the dotted terminal) and the second tap (the undotted terminal) on the primary side of the isolation transformer T1, respectively.

The operating principle of the bidirectional DC/DC circuit is illustrated as follows. In the charging mode, at first, the moving contact of the relay RLY2 is controlled to be connected to the second selection contact, and the relay RLY4 is controlled to be opened. In this case, the second chopper unit and the first rectification unit operate. Then, the IGBTs Q3 and Q4 are controlled to perform high frequency chopping to convert the DC power obtained from the bus to high frequency pulses whose energy is delivered to the battery side via the isolation transformer T1, is then rectified by the first rectification unit formed of the diodes D11, D12, D13 and D14, and is used to charge the battery after being filtered by the filter inductor L5. In the discharging mode, at first, the moving contact of the relay RLY2 is controlled to be connected to the second selection contact and the relay RLY4 is controlled to be closed. In this case, the first chopper unit and the second rectification unit operate. Then, the MOS transistors Q7, Q8, Q9 and Q10 are controlled to perform the high frequency chopping to convert the energy of the battery to high frequency pulses which are delivered to the bus side via the isolation transformer T1, are rectified by the second rectification unit formed of the diodes D3 and D4, and then supply power to the bus.

It should be noted that, the IGBTs Q3 and Q4 and the MOS transistors Q7, Q8, Q9 and Q10 in the embodiment may also be switch transistors in other forms.

Preferably, a voltage stabilizing capacitor C6 is connected in parallel with the series circuit of the MOS transistors Q7 and Q9 in the embodiment.

Figure 14 is a circuit diagram of the bidirectional DC/DC circuit of the UPS according to an eleventh embodiment of the disclosure. In the embodiment, the bidirectional DC/DC circuit includes an isolation transformer T1, a first selection unit, a first chopper unit, a first rectification unit, a second selection unit, a second chopper unit and a second rectification unit. The bidirectional DC/DC circuit further includes a filter inductor L5 arranged on a primary side of the isolation transformer T 1.

There are two taps on the primary side of the isolation transformer T1, and four taps on a secondary side of the isolation transformer T1. The first selection unit, the first chopper unit and the first rectification unit are arranged on the primary side (i.e., the battery side) of the isolation transformer T1; and the second selection unit, the second chopper unit and the second rectification unit are arranged on the secondary side (i.e., the bus side) of the isolation transformer T1.

The circuit structure of the primary side of the isolation transformer T1 in the embodiment is the same as that in the bidirectional DC/DC circuit shown in Figure 13, and the circuit structure of the secondary side of the isolation transformer T1 in the embodiment is the same as that in the bidirectional DC/DC circuit shown in Figure 5. Therefore, the circuit structure of the embodiment will not be described in detail here, and the circuit structures shown in Figures 5 and 13 may be referred to for details.

The working process of the bidirectional DC/DC circuit in the embodiment differs from that of the bidirectional DC/DC circuit shown in Figure 13 only in that: the controlling on the relay RLY2 in Figure 13 is replaced with the controlling on solid-state switches SWITCH1, SWITCH2 and SWITCH3. Specifically, in the charging mode, the solid-state switch SWITCH2 is controlled to be turned on, and the solid-state switches SWITCH1 and SWITCH3 are controlled to be turned off. In this case, the second chopper unit formed of the IGBTs Q3 and Q4 operates. In the discharging mode, the solid-state switches SWITCH1 and SWITCH3 are controlled to be turned on, and the solid-state switch SWITCH2 is controlled to be turned off. In this case, the second rectification unit formed of the diodes D3, D4, D5 and D6 operates.

It should be noted that, the IGBTs Q3 and Q4 and the MOS transistors Q7, Q8, Q9 and Q10 in the embodiment may also be switch transistors in other forms.

In practice, each of the bidirectional DC/DC circuits shown in Figures 11 to 14 may further include a current transformer or a Hall sensor arranged on the primary side of the isolation transformer, to detect the charging current on the primary side. The current transformer is arranged on an AC side of the first rectification unit, and the Hall sensor is arranged on the AC side or a DC side of the first rectification unit.

For example, taking the DC/DC circuit shown in Figure 11 as an example, the current transformer may be arranged between the first tap of the isolation transformer and the common node of the diodes D7 and D9, or may be arranged between the second tap of the isolation transformer and the common node of the diodes D8 and D10. The Hall sensor may be arranged at the position described above where the current transformer is arranged, that is, the Hall sensor may be arranged on the AC side of the first rectification unit. Alternatively, the Hall sensor may be arranged between the filter inductor L4 and a common node of the positive terminal BAT+ of the battery, the filter inductor L4 and the MOS transistor Q5, or may be arranged between the filter inductor L4 and a common node of the diodes D7 and D8, that is, the Hall sensor may be arranged on the DC side of the first rectification unit.

For the DC/DC circuits shown in Figures 12 to 14, the positions where the current transformer and the Hall sensor are arranged are similar to those described with reference to Figure 11, and the description thereof will not be repeated.

The above embodiments are only some of the embodiments of the disclosure. Practically, in other embodiments, each of the first chopper unit and the second chopper unit may be in the form of a push-pull chopper unit, a full bridge chopper unit or a half bridge chopper unit; and each of the first rectification unit and the second rectification unit may be in the form of a full bridge rectification unit, a full wave rectification unit, a voltage-doubler rectification unit or a current-doubler rectification unit. Furthermore, the various forms of the first chopper unit, the second chopper unit, the first rectification unit and the second rectification unit may be combined in different ways. In addition, in the disclosure, the switch transistor is not limited to the MOS transistor and the IGBT, and the position of current sampling point, i.e., the position of the current transformer or the Hall sensor, is also not limited.

The above embodiments are only preferable embodiments of the disclosure, and should not be interpreted as limiting the disclosure. For those skilled in the art, various modifications and variations are possible within the scope of the appended claims.

## Claims

1. A DC/DC circuit (10) of an uninterrupted power supply, wherein the DC/DC circuit (10) is a bidirectional DC/DC circuit (10) connected between a bus and a battery (BAT);
in a charging mode, the bidirectional DC/DC circuit (10) obtains power from the bus and charges the battery (BAT); and in a discharging mode, the bidirectional DC/DC circuit (10) obtains power from the battery (BAT) and supplies the bus with power,
wherein the bidirectional DC/DC circuit (10) comprises:
an isolation transformer (T1);
a first selection unit, a first chopper unit and a first rectification unit arranged on a primary side of the isolation transformer (T1); and
a second selection unit, a second chopper unit and a second rectification unit arranged on a secondary side of the isolation transformer (T1);
and wherein in the charging mode, the second selection unit selects the second chopper unit to operate, and the first selection unit selects the first rectification unit to operate; and in the discharging mode, the first selection unit selects the first chopper unit to operate, and the second selection unit selects the second rectification unit to operate,
wherein the first chopper unit used in the discharging mode and the first rectification unit used in the charging mode are completely independent and the second chopper unit used in the charging mode and the second rectification unit used in the discharging mode are completely independent, and wherein the isolation transformer (T1) is shared in charging and discharging modes.

2. The DC/DC circuit (10) of the uninterrupted power supply according to claim 1,
wherein the primary side and/or the secondary side of the isolation transformer (T1) comprises a plurality of controllable taps, and
wherein the first chopper unit and the first rectification unit are connected to different controllable taps on the primary side of the isolation transformer (T1), respectively, and/or the second chopper unit and the second rectification unit are connected to different controllable taps on the secondary side of the isolation transformer (T1), respectively.

3. The DC/DC circuit (10) of the uninterrupted power supply according to claim 1, wherein each of the first chopper unit and the second chopper unit is a push-pull chopper unit, a full bridge chopper unit or a half bridge chopper unit.

4. The DC/DC circuit (10) of the uninterrupted power supply according to claim 1, wherein each of the first rectification unit and the second rectification unit is a full bridge rectification unit, a full wave rectification unit, a voltage-doubler rectification unit or a current-doubler rectification unit.

5. The DC/DC circuit (10) of the uninterrupted power supply according to claim 1, wherein each of the first selection unit and the second selection unit is a relay (RLY1, RLY2, RLY3, RLY4, RLY1-1, RLY1-2, RLY2-1, RLY2-2) and/or a solid-state switch (SWITCH 1, SWITCH 2, SWITCH 3).

6. The DC/DC circuit (10) of the uninterrupted power supply according to claim 5, wherein in a case that the first selection unit and/or the second selection unit is a relay, the relay comprises at least one single-pole single-throw relay, a single-pole double-throw relay or a double-pole double-throw relay.

7. The DC/DC circuit (10) of the uninterrupted power supply according to claim 1, wherein the bidirectional DC/DC circuit (10) further comprises a current transformer (T2) or a Hall sensor arranged on the primary side and/or the secondary side of the isolation transformer (T1), the current transformer or the Hall sensor is configured to sample a current on the primary side and/or the secondary side of the isolation transformer (T1).

8. The DC/DC circuit (10) of the uninterrupted power supply according to claim 1, wherein the bidirectional DC/DC circuit (10) further comprises filter inductors (LI, L2, L3, L4, L5) arranged on the primary side and the secondary side of the isolation transformer (T1).

9. The DC/DC circuit (10) of the uninterrupted power supply according to claim 1, wherein the first selection unit comprises a single-pole single-throw first relay (RLY1), the second selection unit comprises a single-pole double-throw second relay (RLY2), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3) and a fourth diode (D4), and the bidirectional DC/DC circuit (10) further comprises a first filter inductor (L1) arranged on the primary side of the isolation transformer (T1) and a second filter inductor (L2) arranged on the secondary side of the isolation transformer (T1), and
wherein a positive terminal of the battery (BAT) is connected to a second tap, which is a central tap, on the primary side of the isolation transformer (T1), a negative terminal of the battery (BAT) is connected to a second terminal of the first switch transistor (Q1) and a second terminal of the second switch transistor (Q2) via the first relay (RLY1), a first terminal of the first switch transistor (Q1) and a first terminal of the second switch transistor (Q2) are respectively connected to a first tap, which is a dotted terminal, and a third tap, which is an undotted terminal, on the primary side of the isolation transformer (T1), the first tap and the third tap on the primary side of the isolation transformer (T1) are connected to a cathode of the first diode (D1) and a cathode of the second diode (D2), respectively, and both of an anode of the first diode (D1) and an anode of the second diode (D2) are connected to the negative terminal of the battery (BAT) via the first filter inductor (L1); a third tap, which is a central tap, on the secondary side of the isolation transformer (T1) is connected to a positive bus, a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first selection contact of the second relay (RLY2) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a second selection contact of the second relay (RLY2), and a moving contact of the second relay (RLY2) is connected to a negative bus.

10. The DC/DC circuit (10) of the uninterrupted power supply according to claim 1, wherein the first selection unit comprises a single-pole single-throw first relay (RLY1-1) and third relay (RLY1-2), the second selection unit comprises a single-pole double-throw second relay (RLY2), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3) and a fourth diode (D4), and the bidirectional DC/DC circuit (10) further comprises a first filter inductor (L1) arranged on the primary side of the isolation transformer (T1) and a second filter inductor (L2) arranged on the secondary side of the isolation transformer (T1), and
wherein a positive terminal of the battery (BAT) is connected to a second tap, which is a central tap, on the primary side of the isolation transformer (T1), a negative terminal of the battery (BAT) is connected to a second terminal of the first switch transistor (Q1) and a second terminal of the second switch transistor (Q2), a first terminal of the first switch transistor (Q1) is connected to a first tap, which is a dotted terminal, on the primary side of the isolation transformer (T1) via the first relay (RLY1-1), a first terminal of the second switch (Q2) transistor is connected to a third tap, which is an undotted terminal, on the primary side of the isolation transformer (T1) via the third relay (RLY1-2), the first tap and the third tap on the primary side of the isolation transformer (T1) are connected to a cathode of the first diode (D1) and a cathode of the second diode (D2), respectively, and both of an anode of the first diode (D1) and an anode of the second diode (D2) are connected to the negative terminal of the battery (BAT) via the first filter inductor (LI); and a third tap, which is a central tap, on the secondary side of the isolation transformer (T1) is connected to a positive bus, a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first selection contact of the second relay (RLY1-2) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a second selection contact of the second relay (RLY2), and a moving contact of the second relay (RLY2) is connected to a negative bus.

11. The DC/DC circuit (10) of the uninterrupted power supply according to claim 1, wherein the first selection unit comprises a single-pole single-throw first relay (RLY1), the second selection unit comprises a first solid-state switch (SWITCH1), a second solid-state switch (SWITCH2) and a third solid-state switch (SWITCH3), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3), a fourth diode (D4), a fifth diode (D5) and a sixth diode (D6), the bidirectional DC/DC circuit (10) further comprises a first filter inductor (L1), a second filter inductor (L2) and a third filter inductor (L3), the first filter inductor (L1) is arranged on the primary side of the isolation transformer (T1), and the second filter inductor (L2) and the third filter inductor (L3) are arranged on the secondary side of the isolation transformer (T1);
wherein a positive terminal of the battery (BAT) is connected to a second tap, which is a central tap, on the primary side of the isolation transformer (T1), a negative terminal of the battery (BAT) is connected to a second terminal of the first switch transistor (Q1) and a second terminal of the second switch transistor (Q2) via the first relay (RLY1), a first terminal of the first switch transistor (Q1) and a first terminal of the second switch transistor (Q2) are connected to a first tap, which is a dotted terminal, and a third tap, which is an undotted terminal, on the primary side of the isolation transformer (T1), respectively, the first tap and the third tap on the primary side of the isolation transformer (T1) are connected to a cathode of the first diode (D1) and a cathode of the second diode (D2), respectively, and both of an anode of the first diode (D1) and an anode of the second diode (D2) are connected to the negative terminal of the battery (BAT) via the first filter inductor (LI); and
wherein the third diode (D3), the fourth diode (D4), the fifth diode (D5) and the sixth diode (D6) form a full bridge rectifier, two input terminals of the full bridge rectifier are connected to a first tap and a fourth tap on the secondary side of the isolation transformer (T1), respectively, via the first and third solid-state switches (SWITCH 1,SWITCH3), a first output terminal of the full bridge rectifier is connected to an anode of a second bus capacitor (C2) via the second filter inductor (L2), a second output terminal of the full bridge rectifier is connected to a cathode of a third bus capacitor (C3) via the third filter inductor (L3), a first terminal of the third switch transistor (Q3) is connected to the anode of the second bus capacitor (C2), a second terminal of the fourth switch transistor (Q4) is connected to the cathode of the third bus capacitor (C3), both of a second terminal of the third switch transistor (Q3) and a first terminal of the fourth switch transistor (Q4) are connected to a second tap on the secondary side of the isolation transformer (T1) via the second solid-state switch (SWITCH2).

12. The DC/DC circuit (10) of the uninterrupted power supply according to claim 1, wherein the first selection unit comprises a single-pole single-throw first relay (RLY1-1) and third relay (RLY1-2), the second selection unit comprises a single-pole double-throw second relay (RLY2), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3) and a fourth diode (D4), and the bidirectional DC/DC circuit (10) further comprises a first filter inductor (L1) arranged on the primary side of the isolation transformer (T1) and a second filter inductor (L2) arranged on the secondary side of the isolation transformer (T1);
wherein a positive terminal of the battery (BAT) is connected to a second tap, which is a central tap, on the primary side of the isolation transformer (T1), a negative terminal of the battery (BAT) is connected to a second terminal of the first switch transistor (Q1) and a second terminal of the second switch transistor (Q2), a first terminal of the first switch transistor (Q1) is connected to a cathode of the first diode (D1) via the first relay (RLY1-1), a first terminal of the second switch transistor (Q2) is connected to a cathode of the second diode (D2) via the third relay (RLY1-2), a firs tap and a third tap on the primary side of the isolation transformer (T1) are connected to the cathode of the first diode (D1) and the cathode of the second diode (D2), respectively, and both of an anode of the first diode (D1) and an anode of the second diode (D2) are connected to the negative terminal of the battery (BAT) via the first filter inductor (L1); and
wherein a third tap, which a central tap, on the secondary side of the isolation transformer (T1) is connected to an anode of a second bus capacitor (C2), a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first selection contact of the second relay (RLY2) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a second selection contact of the second relay (RLY2), and a moving contact of the second relay (RLY2) is connected to a cathode of the second bus capacitor (C2).

13. The DC/DC circuit (10) of the uninterrupted power supply according to claim 1, wherein the first selection unit comprises a single-pole single-throw first relay (RLY1-1) and third relay (RLY1-2), the second selection unit comprises a single-pole single-throw fourth relay (RLY2-1) and a fifth relay (RLY2-1), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3) and a fourth diode (D4), and the bidirectional DC/DC circuit (10) further comprises a first filter inductor (L1) arranged on the primary side of the isolation transformer (T1) and a second filter inductor (L2) arranged on the secondary side of the isolation transformer (T1);
wherein a positive terminal of the battery (BAT) is connected to a second tap, which is a central tap, on the primary side of the isolation transformer (T1), a negative terminal of the battery (BAT) is connected to a second terminal of the first switch transistor (Q1) and a second terminal of the second switch transistor (Q2), a first terminal of the first switch transistor (Q1) is connected to a cathode of the first diode (D1) via the first relay (RLY1-1), a first terminal of the second switch transistor (Q2) is connected to a cathode of the second diode (D2) via the third relay (RLY1-2), a first tap and a third tap on the primary side of the isolation transformer (T1) are connected to the cathode of the first diode (D1) and the cathode of the second diode (D2), respectively, and both of an anode of the first diode (D1) and an anode of the second diode (D2) are connected to the negative terminal of the battery (BAT) via the first filter inductor (L1); and
wherein a third tap, which a central tap, on the secondary side of the isolation transformer (T1) is connected to an anode of a second bus capacitor (C2), a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first terminal of the fourth relay (RLY2-1) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a first terminal of the fifth relay (RLY2-2), and both of a second terminal of the fourth relay (RLY2-1) and a second terminal of the fifth relay (RLY2-2) are connected to a cathode of the second bus capacitor (C2).

14. The DC/DC circuit (10) of the uninterrupted power supply according to claim 1, wherein the first selection unit comprises a single-pole single-throw first relay (RLY1-1) and third relay (RLY1-2), the second selection unit comprises a single-pole single-throw type sixth relay (RLY2), the first chopper unit comprises a first switch transistor (Q1) and a second switch transistor (Q2), the second chopper unit comprises a third switch transistor (Q3) and a fourth switch transistor (Q4), the first rectification unit comprises a first diode (D1) and a second diode (D2), the second rectification unit comprises a third diode (D3), a fourth diode (D4), a fifth diode (D5) and a sixth diode (D6), the bidirectional DC/DC circuit (10) further comprises a first filter inductor (L1), a second filter inductor (L2) and a third filter inductor (L3), the first filter inductor (L1) is arranged on the primary side of the isolation transformer (T1), and the second filter inductor (L2) and the third filter inductor (L3) are arranged on the secondary side of the isolation transformer (T1);
wherein a negative terminal of the battery (BAT) is connected to a second terminal of the first switch transistor (Q1) and a second terminal of the second switch transistor (Q2) via the first relay (RLY1-1), a first terminal of the first switch transistor (Q1) and a first terminal of the second switch transistor (Q2) are connected to a second tap and a fourth tap on the primary side of the isolation transformer (T1), respectively, the negative terminal of the battery (BAT) is connected to an anode of the first diode (D1) and an anode of the second diode (D2) via a series circuit formed of the third relay (RLY1-2) and the first filter inductor (L1), and a first tap and a fifth tap on the primary side of the isolation transformer (T1) are connected to a cathode of the first diode (D1) and a cathode of the second diode (D2), respectively; and
wherein the third diode (D3), the fourth diode (D4), the fifth diode (D5) and the sixth diode (D6) form a full bridge diode rectifier, two input terminals of the full bridge diode rectifier are connected to a first tap and a third tap on the secondary side of the isolation transformer (T1), respectively, a first output terminal of the full bridge diode rectifier is connected to an anode of a second bus capacitor (C2) via the second filter inductor (L2), a second output terminal of the full bridge diode rectifier is connected to a cathode of a third bus capacitor (C3) via the third filter inductor (L3), a first terminal of the third switch transistor (Q3) is connected to the anode of the second bus capacitor (C2), a second terminal of the fourth switch transistor (Q4) is connected to the cathode of the third bus capacitor (C3), and both of a second terminal of the third switch transistor (Q3) and a first terminal of the fourth switch transistor (Q4) are connected to the first tap on the secondary side of the isolation transformer (T1) via the sixth relay (RLY2).

15. The DC/DC circuit (10) of the uninterrupted power supply according to any one of claims 9-14, wherein the DC/DC circuit (10) further comprises a current transformer (T2) or a Hall sensor arranged on the primary side of the isolation transformer (T1),
in a case that the DC/DC circuit (10) comprises the current transformer (T2), the connection of the isolation transformer (T1) with the cathode of the first diode (D1) and the cathode of the second diode (D2) is implemented by connecting the isolation transformer (T1) with the cathode of the first diode (D1) and the cathode of the second diode (D2) via the current transformer; and
in a case that the DC/DC circuit (10) comprises the current transformer (T2), the Hall sensor is arranged on a DC side or an AC side of the first rectification unit.

16. The DC/DC circuit (10) of the uninterrupted power supply according to claim 1, wherein the first selection unit comprises a single-pole single-throw third relay (RLY3), the second selection unit comprises a single-pole double-throw second relay (RLY2), the first chopper unit comprises a fifth switch transistor (Q5) and a sixth switch transistor (Q6), the second chopper unit comprises a third switch transistor (Q3) and a fourth switch transistor (Q4), the first rectification unit comprises a seventh diode (D7), an eighth diode (D8), a ninth diode (D9) and a tenth diode (D10), the second rectification unit comprises a third diode (D3) and a fourth diode (D4), and the bidirectional DC/DC circuit (10) further comprises a fourth filter inductor (L4) arranged on the primary side of the isolation transformer (T1) and a second filter inductor (L2) arranged on the secondary side of the isolation transformer (T1);
wherein the fifth switch transistor (Q5) and the sixth switch transistor (Q6) connected in series are connected between a positive terminal and a negative terminal of the battery (BAT), a common node between the fifth switch transistor (Q5) and the sixth switch transistor (Q6) is connected to a first tap on the primary side of the isolation transformer (T1), the positive terminal of the battery (BAT) is connected to a cathode of the seventh diode (D7) and a cathode of the eighth diode (D8) via the fourth filter inductor (L4), an anode of the seventh diode (D7) is connected to a cathode of the ninth diode (D9), an anode of the eighth diode (D8) is connected to a cathode of the tenth diode (D10), an anode of the ninth diode (D9) and an anode of the tenth diode (D10) are connected to the negative terminal of the battery (BAT), the anode of the seventh diode (D7) and the anode of the eighth diode (D8) are connected to the first tap and a second tap on the primary side of the isolation transformer (T1), respectively, a series circuit formed of a fourth voltage stabilizing capacitor (C4) and a fifth voltage stabilizing capacitor (C5) is connected in parallel at two terminals of the fifth switch transistor (Q5) and the sixth switch transistor (Q6), and a common node between the fourth voltage stabilizing capacitor (C4) and the fifth voltage stabilizing capacitor (C5) is connected to the second tap on the primary side of the isolation transformer (T1) via the third relay (RLY3); and
wherein a third tap, which is a central tap, on the secondary side of the isolation transformer (T1) is connected to an anode of a second bus capacitor (C2), a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first selection contact of the second relay (RLY2) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a second selection contact of the second relay (RLY2), and a moving contact of the second relay (RLY2) is connected to a cathode of the second bus capacitor (C2).

17. The DC/DC circuit (10) of the uninterrupted power supply according to claim 1, wherein the first selection unit comprises a single-pole single-throw third relay (RLY3), the second selection unit comprises a first solid-state switch (SWITCH1), a second solid-state switch (SWITCH2) and a third solid-state switch (SWITCH3), the first chopper unit comprises a fifth switch transistor (Q5) and a sixth switch transistor (Q6), the second chopper unit comprises a third switch transistor (Q3) and a fourth switch transistor (Q4), the first rectification unit comprises a seventh diode (D7), an eighth diode (D8), a ninth diode (D9) and a tenth diode (D10), the second rectification unit comprises a third diode (D3), a fourth diode (D4), a fifth diode (D5) and a sixth diode (D6), the bidirectional DC/DC circuit (10) further comprises a fourth filter inductor (L4), a second filter inductor (L2) and a third filter inductor (L3), the fourth filter inductor (L4) is arranged on the primary side of the isolation transformer (T1), and the second filter inductor (L2) and the third filter inductor (L3) are arranged on the secondary side of the isolation transformer (T1);
wherein the fifth switch transistor (Q5) and the sixth switch transistor (Q6) connected in series are connected between a positive terminal and a negative terminal of the battery (BAT), a common node between the fifth switch transistor (Q5) and the sixth switch transistor (Q6) is connected to a first tap on the primary side of the isolation transformer (T1), the positive terminal of the battery (BAT) is connected to a cathode of the seventh diode (D7) and a cathode of the eighth diode (D8) via the fourth filter inductor (L4), an anode of the seventh diode (D7) is connected to a cathode of the ninth diode (D9), an anode of the eighth diode (D8) is connected to a cathode of the tenth diode (D10), an anode of the ninth diode (D9) and an anode of the tenth diode (D10) are connected to the negative terminal of the battery (BAT), the anode of the seventh diode (D7) and the anode of the eighth diode (D8) are also connected to the first tap and a second tap on the primary side of the isolation transformer (T1), respectively, a series circuit formed of a fourth voltage stabilizing capacitor (C4) and a fifth voltage stabilizing capacitor (C5) is connected in parallel at two terminals of the fifth switch transistor (Q5) and the sixth switch transistor (Q6), and a common node between the fourth voltage stabilizing capacitor (C4) and the fifth voltage stabilizing capacitor (C5) is connected to the second tap on the primary side of the isolation transformer (T1) via the third relay (RLY3); and
wherein the third diode (D3), the fourth diode (D4), the fifth diode (D5) and the sixth diode (D6) form a full bridge rectifier, two input terminals of the full bridge rectifier are connected to a first tap and a fourth tap on the secondary side of the isolation transformer (T1), respectively, via the first solid-state switch (SWITCH 1) and the third solid-state switch (SWITCH3), a first output terminal of the full bridge rectifier is connected to an anode of a second bus capacitor (C2) via the second filter inductor (L2), a second output terminal of the full bridge rectifier is connected to a cathode of a third bus capacitor (C3) via the third filter inductor (L3), a first terminal of the third switch transistor (Q3) is connected to the anode of the second bus capacitor (C2), a second terminal of the fourth switch transistor (Q4) is connected to the cathode of the third bus capacitor (C3), and both of a second terminal of the third switch transistor (Q3) and a first terminal of the fourth switch transistor (Q4) are connected to a second tap on the secondary side of the isolation transformer (T1) via the second solid-state switch (SWITCH2).

18. The DC/DC circuit (10) of the uninterrupted power supply according to claim 1, wherein the first selection unit comprises a single-pole single-throw fourth relay (RLY 4), the second selection unit comprises a single-pole double-throw second relay (RLY2), the first chopper unit comprises a seventh switch transistor (Q7), an eighth switch transistor (Q8), a ninth switch transistor (Q9) and a tenth switch transistor (Q10), the second chopper unit comprises a third switch transistor (Q3) and a fourth switch transistor (Q4), the first rectification unit comprises an eleventh diode (D11), a twelfth diode (D12), a thirteenth diode (D13) and a fourteenth diode (D14), the second rectification unit comprises a third diode (D3) and a fourth diode (D4), and the bidirectional DC/DC circuit (10) further comprises a fifth filter inductor (L5) arranged on the primary side of the isolation transformer (T1) and a second filter inductor (L2) arranged on the secondary side of the isolation transformer (T1);
wherein the seventh switch transistor (Q7) is connected in series with the ninth switch transistor (Q9), the eighth switch transistor (Q8) is connected in series with the tenth switch transistor (Q10), both of the series circuit formed of the seventh switch transistor (Q7) and the ninth switch transistor (Q9) and the series circuit formed of the eighth switch transistor (Q8) and the tenth switch transistor (Q10) are connected in parallel with each other between a positive terminal and a negative terminal of the battery (BAT), a common node between the eighth switch transistor (Q8) and the tenth switch transistor (Q10) is connected to a first tap on the primary side of the isolation transformer (T1) via the fourth relay (RLY4), a common node between the seventh switch transistor (Q7) and the ninth switch transistor (Q9) is connected to a second tap on the primary side of the isolation transformer (T1), the positive terminal of the battery (BAT) is connected to a cathode of the eleventh diode (D11) and a cathode of the twelfth diode (D12) via the fifth filter inductor (L5), an anode of the eleventh diode (D11) is connected to a cathode of the thirteenth diode (D13), an anode of the twelfth diode (D12) is connected to a cathode of the fourteenth diode (D14), an anode of the thirteenth diode (D13) and an anode of the fourteenth diode (D14) are connected to the negative terminal of the battery (BAT), and the anode of the eleventh diode (D11) and the anode of the twelfth diode (D12) are connected to the first tap and the second tap on the primary side of the isolation transformer (T1), respectively; and
wherein a third tap, which is a central tap, on the secondary side of the isolation transformer (T1) is connected to an anode of a second bus capacitor (C2), a first tap and a fifth tap on the secondary side of the isolation transformer (T1) are connected to a cathode of the third diode (D3) and a cathode of the fourth diode (D4), respectively, both of an anode of the third diode (D3) and an anode of the fourth diode (D4) are connected to a first selection contact of the second relay (RLY2) via the second filter inductor (L2), a second tap and a fourth tap on the secondary side of the isolation transformer (T1) are connected to a first terminal of the third switch transistor (Q3) and a first terminal of the fourth switch transistor (Q4), respectively, both of a second terminal of the third switch transistor (Q3) and a second terminal of the fourth switch transistor (Q4) are connected to a second selection contact of the second relay (RLY2), and a moving contact of the second relay (RLY2) is connected to a cathode of the second bus capacitor (C2).

19. The DC/DC circuit (10) of the uninterrupted power supply according to claim 1, wherein the first selection unit comprises a single-pole single-throw fourth relay (RLY 4), the second selection unit comprises a first solid-state switch (SWITCH1), a second solid-state switch (SWITCH2) and a third solid-state switch (SWITCH3), the first chopper unit comprises a seventh switch transistor (Q7), an eighth switch transistor (Q8), a ninth switch transistor (Q9) and a tenth switch transistor (Q10), the second chopper unit comprises a third switch transistor (Q3) and a fourth switch transistor (Q4), the first rectification unit comprises an eleventh diode (D11), a twelfth diode (D12), a thirteenth diode (D13) and a fourteenth diode (D14), the second rectification unit comprises a third diode (D3), a fourth diode (D4), a fifth diode (D5) and a sixth diode (D6), the bidirectional DC/DC circuit (10) further comprises a fifth filter inductor (L5), a second filter inductor (L2) and a third filter inductor (L3), the fifth filter inductor (L5) is arranged on the primary side of the isolation transformer (T1), and the second filter inductor (L2) and the third filter inductor (L3) are arranged on the secondary side of the isolation transformer (T1);
wherein the seventh switch transistor (Q7) is connected in series with the ninth switch transistor (Q9), the eighth switch transistor (Q8) is connected in series with the tenth switch transistor (Q10), both of the series circuit formed of the seventh switch transistor (Q7) and the ninth switch transistor (Q9) and the series circuit formed of the eighth switch transistor (Q8) and the tenth switch transistor (Q10) are connected in parallel with each other between a positive terminal and a negative terminal of the battery (BAT), a common node between the eighth switch transistor (Q8) and the tenth switch transistor (Q10) is connected to a first tap on the primary side of the isolation transformer (T1) via the fourth relay (RLY4), a common node between the seventh switch transistor (Q7) and the ninth switch transistor (Q9) is connected to a second tap on the primary side of the isolation transformer (T1), the positive terminal of the battery (BAT) is connected to a cathode of the eleventh diode (D11) and a cathode of the twelfth diode (D12) via the fifth filter inductor (L5), an anode of the eleventh diode (D11) is connected to a cathode of the thirteenth diode (D13), an anode of the twelfth diode (D12) is connected to a cathode of the fourteenth diode (D14), an anode of the thirteenth diode (D13) and an anode of the fourteenth diode (D14) are connected to the negative terminal of the battery (BAT), and the anode of the eleventh diode (D11) and the anode of the twelfth diode (D12) are connected to the first tap and the second tap on the primary side of the isolation transformer (T1), respectively; and
wherein the third diode (D3), the fourth diode (D4), the fifth diode (D5) and the sixth diode (D6) form a full bridge rectifier, two input terminals of the full bridge rectifier are connected to a first tap and a fourth tap on the secondary side of the isolation transformer (T1), respectively, via the first solid-state switch (SWITCH 1) and the third solid-state switch (SWITCH3), a first output terminal of the full bridge rectifier is connected to an anode of a second bus capacitor (C2) via the second filter inductor (L2), a second output terminal of the full bridge rectifier is connected to a cathode of a third bus capacitor (C3) via the third filter inductor (L3), a first terminal of the third switch transistor (Q3) is connected to the anode of the second bus capacitor (C2), a second terminal of the fourth switch transistor (Q4) is connected to the cathode of the third bus capacitor (C3), and both of a second terminal of the third switch transistor (Q3) and a first terminal of the fourth switch transistor (Q4) are connected to a second tap on the secondary side of the isolation transformer (T1) via the second solid-state switch (SWITCH2).

20. The DC/DC circuit (10) of the uninterrupted power supply according to any one of claims 16 to 19, wherein the DC/DC circuit (10) further comprises a current transformer (T2) or a Hall sensor arranged on the primary side of the isolation transformer (T1), the current transformer (T2) is arranged on an AC side of the first rectification unit, and the Hall sensor is arranged on the AC side or a DC side of the first rectification unit.

21. An uninterrupted power supply, wherein the uninterrupted power supply comprises the DC/DC circuit (10) according to any one of claims 1 to 20.

## Patentansprüche

1. DC/DC-Schaltung (10) einer unterbrechungsfreien Stromversorgung, wobei die DC/DC-Schaltung (10) eine zwischen eine Sammelleitung und eine Batterie (BAT) geschaltete bidirektionale DC/DC-Schaltung (10) ist;
in einem Lademodus erhält die bidirektionale DC/DC-Schaltung (10) Strom von der Sammelleitung und lädt die Batterie (BAT); und in einem Entlademodus erhält die bidirektionale DC/DC-Schaltung (10) Strom von der Batterie (BAT) und versorgt die Sammelleitung mit Strom,
wobei die bidirektionale DC/DC-Schaltung (10) Folgendes umfasst:
einen Trenntransformator (T1);
eine erste Auswahleinheit, eine erste Zerhackereinheit und eine erste Gleichrichtungseinheit, angeordnet auf einer Primärseite des Trenntransformators (T1); und
eine zweite Auswahleinheit, eine zweite Zerhackereinheit und eine zweite Gleichrichtungseinheit, angeordnet auf einer Sekundärseite des Trenntransformators (T1);
und wobei in dem Lademodus die zweite Auswahleinheit die zweite Zerhackereinheit zum Betrieb auswählt und die erste Auswahleinheit die erste Gleichrichtungseinheit zum Betrieb auswählt; in dem Entlademodus die erste Auswahleinheit die erste Zerhackereinheit zum Betrieb auswählt und die zweite Auswahleinheit die zweite Gleichrichtungseinheit zum Betrieb auswählt,
wobei die in dem Entlademodus verwendete erste Zerhackereinheit und die in dem Lademodus verwendete erste Gleichrichtungseinheit gänzlich unabhängig sind und die in dem Entlademodus verwendete zweite Zerhackereinheit und die in dem Entlademodus verwendete zweite Gleichrichtungseinheit gänzlich unabhängig sind und wobei der Trenntransformator (T1) in dem Lade- und dem Entlademodus gemeinsam genutzt wird.

2. DC/DC-Schaltung (10) der unterbrechungsfreien Stromversorgung nach Anspruch 1,
wobei die Primärseite und/oder die Sekundärseite des Trenntransformators (T1) mehrere steuerbare Abgriffe umfasst, und
wobei die erste Zerhackereinheit und die erste Gleichrichtungseinheit jeweils mit verschiedenen steuerbaren Abgriffen auf der Primärseite des Trenntransformators (T1) verbunden sind, und/oder die zweite Zerhackereinheit und die zweite Gleichrichtungseinheit jeweils mit verschiedenen steuerbaren Abgriffen auf der Sekundärseite des Trenntransformators (T1) verbunden sind.

3. DC/DC-Schaltung (10) der unterbrechungsfreien Stromversorgung nach Anspruch 1,
wobei jede der ersten Zerhackereinheit und der zweiten Zerhackereinheit eine Gegentakt-Zerhackereinheit, eine Vollbrücke-Zerhackereinheit oder eine Halbbrücke-Zerhackereinheit ist.

4. DC/DC-Schaltung (10) der unterbrechungsfreien Stromversorgung nach Anspruch 1,
wobei jede der ersten Gleichrichtungseinheit und der zweiten Gleichrichtungseinheit eine Vollbrücke-Gleichrichtungseinheit, eine Vollwelle-Gleichrichtungseinheit, eine Spannungsverdopplung-Gleichrichtungseinheit oder eine Stromverdopplung-Gleichrichtungseinheit ist.

5. DC/DC-Schaltung (10) der unterbrechungsfreien Stromversorgung nach Anspruch 1,
wobei jede der ersten Auswahleinheit und der zweiten Auswahleinheit ein Relais (RLY1, RLY2, RLY3, RLY4, RLY1-1, RLY1-2, RLY2-1, RLY2-2) und/oder ein Festkörperschalter (SWITCH 1, SWITCH 2, SWITCH 3) ist.

6. DC/DC-Schaltung (10) der unterbrechungsfreien Stromversorgung nach Anspruch 5,
wobei in einem Fall, dass die erste Auswahleinheit und/oder die zweite Auswahleinheit ein Relais ist, das ein Ein-Pol-Ein-Wechsler-Relais und/oder ein Ein-Pol-Zwei-Wechsler-Relais und/oder ein Zwei-Pol-Zwei-Wechsler-Relais umfasst.

7. DC/DC-Schaltung (10) der unterbrechungsfreien Stromversorgung nach Anspruch 1,
wobei die bidirektionale DC/DC-Schaltung (10) ferner einen Stromübertrager (T2) oder einen Hall-Sensor umfasst, angeordnet auf der Primärseite und/oder der Sekundärseite des Trenntransformators (T1), wobei der Stromübertrager oder der Hall-Sensor ausgelegt ist zum Abtasten eines Stroms auf der Primärseite und/oder der Sekundärseite des Trenntransformators (T1).

8. DC/DC-Schaltung (10) der unterbrechungsfreien Stromversorgung nach Anspruch 1,
wobei die bidirektionale DC/DC-Schaltung (10) ferner Filterdrosseln (L1, L2, L3, L4, L5) umfasst, die auf der Primärseite und der Sekundärseite des Trenntransformators (T1) angeordnet sind.

9. DC/DC-Schaltung (10) der unterbrechungsfreien Stromversorgung nach Anspruch 1, wobei die erste Auswahleinheit ein Ein-Pol-Ein-Wechsler-Erstrelais (RLY1) umfasst, die zweite Auswahleinheit ein Ein-Pol-Zwei-Wechsler-Zweitrelais (RLY2) umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3) und eine vierte Diode (D4) umfasst, und die bidirektionale DC/DC-Schaltung (10) ferner eine erste Filterdrossel (L1), die auf der Primärseite des Trenntransformators (T1) angeordnet ist, und eine zweite Filterdrossel (L2), die auf der Sekundärseite des Trenntransformators (T1) angeordnet ist, umfasst, und
wobei ein positiver Anschluss der Batterie (BAT) mit einem zweiten Abgriff, welcher ein Mittelabgriff ist, auf der Primärseite des Trenntransformators (T1) verbunden ist, ein negativer Anschluss der Batterie (BAT) mit einem zweiten Anschluss des ersten Schalttransistors (Q1) und einem zweiten Anschluss des zweiten Schalttransistors (Q2) über das erste Relais (RLY1) verbunden ist, ein erster Anschluss des ersten Schalttransistors (Q1) und ein erster Anschluss des zweiten Schalttransistors (Q2) jeweils mit einem ersten Abgriff, welcher ein gepunkteter Anschluss ist, und einem dritten Abgriff, welcher ein ungepunkteter Anschluss ist, auf der Primärseite des Trenntransformators (T1) verbunden ist, der erste Abgriff und der dritte Abgriff auf der Primärseite des Trenntransformators (T1) jeweils mit einer Kathode der ersten Diode (D1) und einer Kathode der zweiten Diode (D2) verbunden sind und sowohl eine Anode der ersten Diode (D1) als auch eine Anode der zweiten Diode (D2) mit dem negativen Anschluss der Batterie (BAT) über die erste Filterdrossel (L1) verbunden sind; ein dritter Abgriff, welcher ein Mittelabgriff ist, auf der Sekundärseite des Trenntransformators (T1) mit einer positiven Sammelleitung verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Auswahlkontakt des zweiten Relais (RLY2) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem zweiten Auswahlkontakt des zweiten Relais (RLY2) verbunden sind und ein beweglicher Kontakt des zweiten Relais (RLY2) mit einer negativen Sammelleitung verbunden ist.

10. DC/DC-Schaltung (10) der unterbrechungsfreien Stromversorgung nach Anspruch 1, wobei die erste Auswahleinheit ein Ein-Pol-Ein-Wechsler-Erstrelais (RLY1-1) und ein -Drittrelais (RLY1-2) umfasst, die zweite Auswahleinheit ein Ein-Pol-Zwei-Wechsler-Zweitrelais (RLY2) umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3) und eine vierte Diode (D4) umfasst, und die bidirektionale DC/DC-Schaltung (10) ferner eine erste Filterdrossel (L1), die auf der Primärseite des Trenntransformators (T1) angeordnet ist, und eine zweite Filterdrossel (L2), die auf der Sekundärseite des Trenntransformators (T1) angeordnet ist, umfasst, und
wobei ein positiver Anschluss der Batterie (BAT) mit einem zweiten Abgriff, welcher ein Mittelabgriff ist, auf der Primärseite des Trenntransformators (T1) verbunden ist, ein negativer Anschluss der Batterie (BAT) mit einem zweiten Anschluss des ersten Schalttransistors (Q1) und einem zweiten Anschluss des zweiten Schalttransistors (Q2) verbunden ist, ein erster Anschluss des ersten Schalttransistors (Q1) mit einem ersten Abgriff, welcher ein gepunkteter Anschluss ist, auf der Primärseite des Trenntransformators (T1) über das erste Relais (RLY1-1) verbunden ist, ein erster Anschluss des zweiten Schalttransistors (Q2) ist mit einem dritten Abgriff, welcher ein ungepunkteter Anschluss ist, auf der Primärseite des Trenntransformators (T1) über das dritte Relais (RLY1-2) verbunden ist, der erste Abgriff und der dritte Abgriff auf der Primärseite des Trenntransformators (T1) jeweils mit einer Kathode der ersten Diode (D1) und einer Kathode der zweiten Diode (D2) verbunden sind und sowohl eine Anode der ersten Diode (D1) als auch eine Anode der zweiten Diode (D2) mit dem negativen Anschluss der Batterie (BAT) über die erste Filterdrossel (L1) verbunden sind; und ein dritter Abgriff, welcher ein Mittelabgriff ist, auf der Sekundärseite des Trenntransformators (T1) mit einer positiven Sammelleitung verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Auswahlkontakt des zweiten Relais (RLY1-2) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem zweiten Auswahlkontakt des zweiten Relais (RLY2) verbunden sind und ein beweglicher Kontakt des zweiten Relais (RLY2) mit einer negativen Sammelleitung verbunden ist.

11. DC/DC-Schaltung (10) der unterbrechungsfreien Stromversorgung nach Anspruch 1,
wobei die erste Auswahleinheit ein Ein-Pol-Ein-Wechsler-Erstrelais (RLY1) umfasst, die zweite Auswahleinheit einen ersten Festkörperschalter (SWITCH1), einen zweiten Festkörperschalter (SWITCH2) und einen dritten Festkörperschalter (SWITCH3) umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3), eine vierte Diode (D4), eine fünfte Diode (D5) und eine sechste Diode (D6) umfasst, die bidirektionale DC/DC-Schaltung (10) ferner eine erste Filterdrossel (L1), eine zweite Filterdrossel (L2) und eine dritte Filterdrossel (L3) umfasst, die erste Filterdrossel (L1) auf der Primärseite des Trenntransformators (T1) angeordnet ist und die zweite Filterdrossel (L2) und die dritte Filterdrossel (L3) auf der Sekundärseite des Trenntransformators (T1) angeordnet sind;
wobei ein positiver Anschluss der Batterie (BAT) mit einem zweiten Abgriff, welcher ein Mittelabgriff ist, auf der Primärseite des Trenntransformators (T1) verbunden ist, ein negativer Anschluss der Batterie (BAT) mit einem zweiten Anschluss des ersten Schalttransistors (Q1) und einem zweiten Anschluss des zweiten Schalttransistors (Q2) über das erste Relais (RLY1) verbunden ist, ein erster Anschluss des ersten Schalttransistors (Q1) und ein erster Anschluss des zweiten Schalttransistors (Q2) jeweils mit einem ersten Abgriff, welcher ein gepunkteter Anschluss ist, und einem dritten Abgriff, welcher ein ungepunkteter Anschluss ist, auf der Primärseite des Trenntransformators (T1) verbunden ist, der erste Abgriff und der dritte Abgriff auf der Primärseite des Trenntransformators (T1) jeweils mit einer Kathode der ersten Diode (D1) und einer Kathode der zweiten Diode (D2) verbunden sind und sowohl eine Anode der ersten Diode (D1) als auch eine Anode der zweiten Diode (D2) mit dem negativen Anschluss der Batterie (BAT) über die erste Filterdrossel (L1) verbunden sind; und
wobei die dritte Diode (D3), die vierte Diode (D4), die fünfte Diode (D5) und die sechste Diode (D6) einen Vollbrücke-Gleichrichter ausbilden, zwei Eingangsanschlüsse des Vollbrücke-Gleichrichters jeweils mit einem ersten Abgriff und einem vierten Abgriff auf der Sekundärseite des Trenntransformators (T1) über den ersten und den dritten Festkörperschalter (SWITCH1, SWITCH3) verbunden sind, ein erster Ausgangsanschluss des Vollbrücke-Gleichrichters mit einer Anode eines zweiten Sammelleitungskondensators (C2) über die zweite Filterdrossel (L2) verbunden ist, ein zweiter Ausgangsanschluss des Vollbrücke-Gleichrichters mit einer Kathode eines dritten Sammelleitungskondensators (C3) über die dritte Filterdrossel (L3) verbunden ist, ein erster Anschluss des dritten Schalttransistors (Q3) mit der Anode des zweiten Sammelleitungskondensators (C2) verbunden ist, ein zweiter Anschluss des vierten Schalttransistors (Q4) mit der Kathode des dritten Sammelleitungskondensators (C3) verbunden ist, sowohl ein zweiter Anschluss des dritten Schalttransistors (Q3) als auch ein erster Anschluss des vierten Schalttransistors (Q4) mit einem zweiten Abgriff auf der Sekundärseite des Trenntransformators (T1) über den zweiten Festkörperschalter (SWITCH2) verbunden ist.

12. DC/DC-Schaltung (10) der unterbrechungsfreien Stromversorgung nach Anspruch 1, wobei die erste Auswahleinheit ein Ein-Pol-Ein-Wechsler-Erstrelais (RLY1-1) und ein -Drittrelais (RLY1-2) umfasst, die zweite Auswahleinheit ein Ein-Pol-Zwei-Wechsler-Zweitrelais (RLY2) umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3) und eine vierte Diode (D4) umfasst, und die bidirektionale DC/DC-Schaltung (10) ferner eine erste Filterdrossel (L1), die auf der Primärseite des Trenntransformators (T1) angeordnet ist, und eine zweite Filterdrossel (L2), die auf der Sekundärseite des Trenntransformators (T1) angeordnet ist, umfasst,
wobei ein positiver Anschluss der Batterie (BAT) mit einem zweiten Abgriff, welcher ein Mittelabgriff ist, auf der Primärseite des Trenntransformators (T1) verbunden ist, ein negativer Anschluss der Batterie (BAT) mit einem zweiten Anschluss des ersten Schalttransistors (Q1) und einem zweiten Anschluss des zweiten Schalttransistors (Q2) verbunden ist, ein erster Anschluss des ersten Schalttransistors (Q1) mit einer Kathode der ersten Diode (D1) über das erste Relais (RLY1-1) verbunden ist, ein erster Anschluss des zweiten Schalttransistors (Q2) mit einer Kathode der zweiten Diode (D2) über das dritte Relais (RLY1-2) verbunden ist, ein erster Abgriff und ein dritter Abgriff auf der Primärseite des Trenntransformators (T1) jeweils mit der Kathode der ersten Diode (D1) und der Kathode der zweiten Diode (D2) verbunden sind, und sowohl eine Anode der ersten Diode (D1) als auch eine Anode der zweiten Diode (D2) mit dem negativen Anschluss der Batterie (BAT) über die erste Filterdrossel (L1) verbunden sind; und
wobei ein dritter Abgriff, welcher ein Mittelabgriff ist, auf der Sekundärseite des Trenntransformators (T1) mit einer Anode eines zweiten Sammelleitungskondensators (C2) verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Auswahlkontakt des zweiten Relais (RLY2) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem zweiten Auswahlkontakt des zweiten Relais (RLY2) verbunden sind und ein beweglicher Kontakt des zweiten Relais (RLY2) mit einer Kathode des zweiten Sammelleitungskondensators (C2) verbunden ist.

13. DC/DC-Schaltung (10) der unterbrechungsfreien Stromversorgung nach Anspruch 1,
wobei die erste Auswahleinheit ein Ein-Pol-Ein-Wechsler-Erstrelais (RLY1-1) und ein -Drittrelais (RLY1-2) umfasst, die zweite Auswahleinheit ein Ein-Pol-Ein-Wechsler-Viertrelais (RLY2-1) und ein -Fünftrelais (RLY2-1) umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3) und eine vierte Diode (D4) umfasst, und die bidirektionale DC/DC-Schaltung (10) ferner eine erste Filterdrossel (L1), die auf der Primärseite des Trenntransformators (T1) angeordnet ist, und eine zweite Filterdrossel (L2), die auf der Sekundärseite des Trenntransformators (T1) angeordnet ist, umfasst;
wobei ein positiver Anschluss der Batterie (BAT) mit einem zweiten Abgriff, welcher ein Mittelabgriff ist, auf der Primärseite des Trenntransformators (T1) verbunden ist, ein negativer Anschluss der Batterie (BAT) mit einem zweiten Anschluss des ersten Schalttransistors (Q1) und einem zweiten Anschluss des zweiten Schalttransistors (Q2) verbunden ist, ein erster Anschluss des ersten Schalttransistors (Q1) mit einer Kathode der ersten Diode (D1) über das erste Relais (RLY1-1) verbunden ist, ein erster Anschluss des zweiten Schalttransistors (Q2) mit einer Kathode der zweiten Diode (D2) über das dritte Relais (RLY1-2) verbunden ist, ein erster Abgriff und ein dritter Abgriff auf der Primärseite des Trenntransformators (T1) jeweils mit der Kathode der ersten Diode (D1) und der Kathode der zweiten Diode (D2) verbunden sind, und sowohl eine Anode der ersten Diode (D1) als auch eine Anode der zweiten Diode (D2) mit dem negativen Anschluss der Batterie (BAT) über die erste Filterdrossel (L1) verbunden sind; und
wobei ein dritter Abgriff, welcher ein Mittelabgriff ist, auf der Sekundärseite des Trenntransformators (T1) mit einer Anode eines zweiten Sammelleitungskondensators (C2) verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Anschluss des vierten Relais (RLY2-1) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem ersten Anschluss des fünften Relais (RLY2-2) verbunden sind, und sowohl ein zweiter Anschluss des vierten Relais (RLY2-1) als auch ein zweiter Anschluss des fünften Relais (RLY2-2) mit einer Kathode des zweiten Sammelleitungskondensators (C2) verbunden sind.

14. DC/DC-Schaltung (10) der unterbrechungsfreien Stromversorgung nach Anspruch 1, wobei die erste Auswahleinheit ein Ein-Pol-Ein-Wechsler-Erstrelais (RLY1-1) und ein -Drittrelais (RLY1-2) umfasst, die zweite Auswahleinheit ein sechstes Relais (RLY2) der Ein-Pol-Ein-Wechsler-Art umfasst, die erste Zerhackereinheit einen ersten Schalttransistor (Q1) und einen zweiten Schalttransistor (Q2) umfasst, die zweite Zerhackereinheit einen dritten Schalttransistor (Q3) und einen vierten Schalttransistor (Q4) umfasst, die erste Gleichrichtungseinheit eine erste Diode (D1) und eine zweite Diode (D2) umfasst, die zweite Gleichrichtungseinheit eine dritte Diode (D3), eine vierte Diode (D4), eine fünfte Diode (D5) und eine sechste Diode (D6) umfasst, die bidirektionale DC/DC-Schaltung (10) ferner eine erste Filterdrossel (L1), eine zweite Filterdrossel (L2) und eine dritte Filterdrossel (L3) umfasst, die erste Filterdrossel (L1) auf der Primärseite des Trenntransformators (T1) angeordnet ist und die zweite Filterdrossel (L2) und die dritte Filterdrossel (L3) auf der Sekundärseite des Trenntransformators (T1) angeordnet sind;
wobei ein negativer Anschluss der Batterie (BAT) mit einem zweiten Anschluss des ersten Schalttransistors (Q1) und einem zweiten Anschluss des zweiten Schalttransistors (Q2) über das erste Relais (RLY1-1) verbunden ist, ein erster Anschluss des ersten Schalttransistors (Q1) und ein erster Anschluss des zweiten Schalttransistors (Q2) jeweils mit einem zweiten Abgriff und einem vierten Abgriff auf der Primärseite des Trenntransformators (T1) verbunden sind, der negative Anschluss der Batterie (BAT) mit einer Anode der ersten Diode (D1) und einer Anode der zweiten Diode (D2) über eine von dem dritten Relais (RLY1-2) und der ersten Filterdrossel (L1) ausgebildeten Serienschaltung verbunden ist, und ein erster Abgriff und ein fünfter Abgriff auf der Primärseite des Trenntransformators (T1) jeweils mit einer Kathode der ersten Diode (D1) und einer Kathode der zweiten Diode (D2) verbunden sind; und
wobei die dritte Diode (D3), die vierte Diode (D4), die fünfte Diode (D5) und die sechste Diode (D6) einen Vollbrücke-Diodengleichrichter ausbilden, zwei Eingangsanschlüsse des Vollbrücke-Diodengleichrichters jeweils mit einem ersten Abgriff und einem dritten Abgriff auf der Sekundärseite des Trenntransformators (T1) verbunden sind, ein erster Ausgangsanschluss des Vollbrücke-Diodengleichrichters mit einer Anode eines zweiten Sammelleitungskondensators (C2) über die zweite Filterdrossel (L2) verbunden ist, ein zweiter Ausgangsanschluss des Vollbrücke-Diodengleichrichters mit einer Kathode eines dritten Sammelleitungskondensators (C3) über die dritte Filterdrossel (L3) verbunden ist, ein erster Anschluss des dritten Schalttransistors (Q3) mit der Anode des zweiten Sammelleitungskondensators (C2) verbunden ist, ein zweiter Anschluss des vierten Schalttransistors (Q4) mit der Kathode des dritten Sammelleitungskondensators (C3) verbunden ist, und sowohl ein zweiter Anschluss des dritten Schalttransistors (Q3) als auch ein erster Anschluss des vierten Schalttransistors (Q4) mit dem ersten Abgriff auf der Sekundärseite des Trenntransformators (T1) über das sechste Relais (RLY2) verbunden ist.

15. DC/DC-Schaltung (10) der unterbrechungsfreien Stromversorgung nach einem der Ansprüche 9-14, wobei die DC/DC-Schaltung (10) ferner einen Stromübertrager (T2) oder einen Hall-Sensor umfasst, angeordnet auf der Primärseite des Trenntransformators (T1),
in einem Fall, dass die DC/DC-Schaltung (10) den Stromübertrager (T2) umfasst, ist die Verbindung des Trenntransformators (T1) mit der Kathode der ersten Diode (D1) und der Kathode der zweiten Diode (D2) durch Verbinden des Trenntransformators (T1) mit der Kathode der ersten Diode (D1) und der Kathode der zweiten Diode (D2) über den Stromübertrager implementiert; und
in einem Fall, dass die DC/DC-Schaltung (10) den Stromübertrager (T2) umfasst, ist der Hall-Sensor auf einer Gleichstromseite oder einer Wechselstromseite der ersten Gleichrichtungseinheit angeordnet.

16. DC/DC-Schaltung (10) der unterbrechungsfreien Stromversorgung nach Anspruch 1, wobei die erste Auswahleinheit ein Ein-Pol-Ein-Wechsler-Drittrelais (RLY3) umfasst, die zweite Auswahleinheit ein Ein-Pol-Zwei-Wechsler-Zweitrelais (RLY2) umfasst, die erste Zerhackereinheit einen fünften Schalttransistor (Q5) und einen sechsten Schalttransistor (Q6) umfasst, die zweite Zerhackereinheit einen dritten Schalttransistor (Q3) und einen vierten Schalttransistor (Q4) umfasst, die erste Gleichrichtungseinheit eine siebte Diode (D7), eine achte Diode (D8), eine neunte Diode (D9) und eine zehnte Diode (D10) umfasst, die zweite Gleichrichtungseinheit eine dritte Diode (D3) und eine vierte Diode (D4) umfasst, und die bidirektionale DC/DC-Schaltung (10) ferner eine vierte Filterdrossel (L4), die auf der Primärseite des Trenntransformators (T1) angeordnet ist, und eine zweite Filterdrossel (L2), die auf der Sekundärseite des Trenntransformators (T1) angeordnet ist, umfasst;
wobei der fünfte Schalttransistor (Q5) und der sechste Schalttransistor (Q6) in Serie zwischen einen positiven Anschluss und einen negativen Anschluss der Batterie (BAT) geschaltet sind, ein gemeinsamer Knoten zwischen dem fünften Schalttransistor (Q5) und dem sechsten Schalttransistor (Q6) mit einem ersten Abgriff auf der Primärseite des Trenntransformators (T1) verbunden ist, der positive Anschluss der Batterie (BAT) mit einer Kathode der siebten Diode (D7) und einer Kathode der achten Diode (D8) über die vierte Filterdrossel (L4) verbunden ist, eine Anode der siebten Diode (D7) mit einer Kathode der neunten Diode (D9) verbunden ist, eine Anode der achten Diode (D8) mit einer Kathode der zehnten Diode (D10) verbunden ist, eine Anode der neunten Diode (D9) und eine Anode der zehnten Diode (D10) mit dem negativen Anschluss der Batterie (BAT) verbunden sind, die Anode der siebten Diode (D7) und die Anode der achten Diode (D8) jeweils mit dem ersten Abgriff und einem zweiten Abgriff auf der Primärseite des Trenntransformators (T1) verbunden sind, eine aus einem vierten spannungsstabilisierenden Kondensator (C4) und einem fünften spannungsstabilisierenden Kondensator (C5) ausgebildete Serienschaltung ist parallel zu zwei Anschlüssen des fünften Schalttransistors (Q5) und des sechsten Schalttransistors (Q6) geschaltet, und ein gemeinsamer Knoten zwischen dem vierten spannungsstabilisierenden Kondensator (C4) und dem fünften spannungsstabilisierenden Kondensator (C5) ist mit dem zweiten Abgriff auf der Primärseite des Trenntransformators (T1) über das dritte Relais (RLY3) verbunden; und
wobei ein dritter Abgriff, welcher ein Mittelabgriff ist, auf der Sekundärseite des Trenntransformators (T1) mit einer Anode eines zweiten Sammelleitungskondensators (C2) verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Auswahlkontakt des zweiten Relais (RLY2) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem zweiten Auswahlkontakt des zweiten Relais (RLY2) verbunden sind und ein beweglicher Kontakt des zweiten Relais (RLY2) mit einer Kathode des zweiten Sammelleitungskondensators (C2) verbunden ist.

17. DC/DC-Schaltung (10) der unterbrechungsfreien Stromversorgung nach Anspruch 1, wobei die erste Auswahleinheit ein Ein-Pol-Ein-Wechsler-Drittrelais (RLY3) umfasst, die zweite Auswahleinheit einen ersten Festkörperschalter (SWITCH1), einen zweiten Festkörperschalter (SWITCH2) und einen dritten Festkörperschalter (SWITCH3) umfasst, die erste Zerhackereinheit einen fünften Schalttransistor (Q5) und einen sechsten Schalttransistor (Q6) umfasst, die zweite Zerhackereinheit einen dritten Schalttransistor (Q3) und einen vierten Schalttransistor (Q4) umfasst, die erste Gleichrichtungseinheit eine siebte Diode (D7), eine achte Diode (D8), eine neunte Diode (D9) und eine zehnte Diode (D10) umfasst, die zweite Gleichrichtungseinheit eine dritte Diode (D3), eine vierte Diode (D4), eine fünfte Diode (D5) und eine sechste Diode (D6) umfasst, die bidirektionale DC/DC-Schaltung (10) ferner eine vierte Filterdrossel (L4), eine zweite Filterdrossel (L2) und eine dritte Filterdrossel (L3) umfasst, die vierte Filterdrossel (L4) auf der Primärseite des Trenntransformators (T1) angeordnet ist und die zweite Filterdrossel (L2) und die dritte Filterdrossel (L3) auf der Sekundärseite des Trenntransformators (T1) angeordnet sind;
wobei der fünfte Schalttransistor (Q5) und der sechste Schalttransistor (Q6) in Serie zwischen einen positiven Anschluss und einen negativen Anschluss der Batterie (BAT) geschaltet sind, ein gemeinsamer Knoten zwischen dem fünften Schalttransistor (Q5) und dem sechsten Schalttransistor (Q6) mit einem ersten Abgriff auf der Primärseite des Trenntransformators (T1) verbunden ist, der positive Anschluss der Batterie (BAT) mit einer Kathode der siebten Diode (D7) und einer Kathode der achten Diode (D8) über die vierte Filterdrossel (L4) verbunden ist, eine Anode der siebten Diode (D7) mit einer Kathode der neunten Diode (D9) verbunden ist, eine Anode der achten Diode (D8) mit einer Kathode der zehnten Diode (D10) verbunden ist, eine Anode der neunten Diode (D9) und eine Anode der zehnten Diode (D10) mit dem negativen Anschluss der Batterie (BAT) verbunden sind, die Anode der siebten Diode (D7) und die Anode der achten Diode (D8) jeweils auch mit dem ersten Abgriff und einem zweiten Abgriff auf der Primärseite des Trenntransformators (T1) verbunden sind, eine aus einem vierten spannungsstabilisierenden Kondensator (C4) und einem fünften spannungsstabilisierenden Kondensator (C5) ausgebildete Serienschaltung ist parallel zu zwei Anschlüssen des fünften Schalttransistors (Q5) und des sechsten Schalttransistors (Q6) geschaltet, und ein gemeinsamer Knoten zwischen dem vierten spannungsstabilisierenden Kondensator (C4) und dem fünften spannungsstabilisierenden Kondensator (C5) ist mit dem zweiten Abgriff auf der Primärseite des Trenntransformators (T1) über das dritte Relais (RLY3) verbunden; und
wobei die dritte Diode (D3), die vierte Diode (D4), die fünfte Diode (D5) und die sechste Diode (D6) einen Vollbrücke-Gleichrichter ausbilden, zwei Eingangsanschlüsse des Vollbrücke-Gleichrichters jeweils mit einem ersten Abgriff und einem vierten Abgriff auf der Sekundärseite des Trenntransformators (T1) über den ersten Festkörperschalter (SWITCH1) und den dritten Festkörperschalter (SWITCH3) verbunden sind, ein erster Ausgangsanschluss des Vollbrücke-Gleichrichters mit einer Anode eines zweiten Sammelleitungskondensators (C2) über die zweite Filterdrossel (L2) verbunden ist, ein zweiter Ausgangsanschluss des Vollbrücke-Gleichrichters mit einer Kathode eines dritten Sammelleitungskondensators (C3) über die dritte Filterdrossel (L3) verbunden ist, ein erster Anschluss des dritten Schalttransistors (Q3) mit der Anode des zweiten Sammelleitungskondensators (C2) verbunden ist, ein zweiter Anschluss des vierten Schalttransistors (Q4) mit der Kathode des dritten Sammelleitungskondensators (C3) verbunden ist, und sowohl ein zweiter Anschluss des dritten Schalttransistors (Q3) als auch ein erster Anschluss des vierten Schalttransistors (Q4) mit einem zweiten Abgriff auf der Sekundärseite des Trenntransformators (T1) über den zweiten Festkörperschalter (SWITCH2) verbunden ist.

18. DC/DC-Schaltung (10) der unterbrechungsfreien Stromversorgung nach Anspruch 1, wobei die erste Auswahleinheit ein Ein-Pol-Ein-Wechsler-Viertrelais (RLY4) umfasst, die zweite Auswahleinheit ein Ein-Pol-Zwei-Wechsler-Zweitrelais (RLY2) umfasst, die erste Zerhackereinheit einen siebten Schalttransistor (Q7), einen achten Schalttransistor (Q8), einen neunten Schalttransistor (Q9) und einen zehnten Schalttransistor (Q10) umfasst, die zweite Zerhackereinheit einen dritten Schalttransistor (Q3) und einen vierten Schalttransistor (Q4) umfasst, die erste Gleichrichtungseinheit eine elfte Diode (D11), eine zwölfte Diode (D12), eine dreizehnte Diode (D13) und eine vierzehnte Diode (D14) umfasst, die zweite Gleichrichtungseinheit eine dritte Diode (D3) und eine vierte Diode (D4) umfasst, und die bidirektionale DC/DC-Schaltung (10) ferner eine fünfte Filterdrossel (L5), die auf der Primärseite des Trenntransformators (T1) angeordnet ist, und eine zweite Filterdrossel (L2), die auf der Sekundärseite des Trenntransformators (T1) angeordnet ist, umfasst;
wobei der siebte Schalttransistor (Q7) mit dem neunten Schalttransistor (Q9) in Serie geschaltet ist, der achte Schalttransistor (Q8) mit dem zehnten Schalttransistor (Q10) in Serie geschaltet ist, sowohl die aus dem siebten Schalttransistor (Q7) und dem neunten Schalttransistor (Q9) ausgebildete Serienschaltung als auch die aus dem achten Schalttransistor (Q8) und dem zehnten Schalttransistor (Q10) ausgebildete Serienschaltung parallel zueinander zwischen einen positiven Anschluss und einen negativen Anschluss der Batterie (BAT) geschaltet sind, ein gemeinsamer Knoten zwischen dem achten Schalttransistor (Q8) und dem zehnten Schalttransistor (Q10) mit einem ersten Abgriff auf der Primärseite des Trenntransformators (T1) über das vierte Relais (RLY4) verbunden ist, ein gemeinsamer Knoten zwischen dem siebten Schalttransistor (Q7) und dem neunten Schalttransistor (Q9) mit einem zweiten Abgriff auf der Primärseite des Trenntransformators (T1) verbunden ist, der positive Anschluss der Batterie (BAT) mit einer Kathode der elften Diode (D11) und einer Kathode der zwölften Diode (D12) über die fünfte Filterdrossel (L5) verbunden ist, eine Anode der elften Diode (D11) mit einer Kathode der dreizehnten Diode (D13) verbunden ist, eine Anode der zwölften Diode (D12) mit einer Kathode der vierzehnten Diode (D14) verbunden ist, eine Anode der dreizehnten Diode (D13) und eine Anode der vierzehnten Diode (D14) mit dem negativen Anschluss der Batterie (BAT) verbunden sind, und die Anode der elften Diode (D11) und die Anode der zwölften Diode (D12) jeweils mit dem ersten Abgriff und dem zweiten Abgriff auf der Primärseite des Trenntransformators (T1) verbunden sind; und
wobei ein dritter Abgriff, welcher ein Mittelabgriff ist, auf der Sekundärseite des Trenntransformators (T1) mit einer Anode eines zweiten Sammelleitungskondensators (C2) verbunden ist, ein erster Abgriff und ein fünfter Abgriff auf der Sekundärseite des Trenntransformators (T1) jeweils mit einer Kathode der dritten Diode (D3) und einer Kathode der vierten Diode (D4) verbunden sind, sowohl eine Anode der dritten Diode (D3) als auch eine Anode der vierten Diode (D4) mit einem ersten Auswahlkontakt des zweiten Relais (RLY2) über die zweite Filterdrossel (L2) verbunden sind, ein zweiter Abgriff und ein vierter Abgriff auf der Sekundärseite des Trenntransformators (T1) jeweils mit einem ersten Anschluss des dritten Schalttransistors (Q3) und einem ersten Anschluss des vierten Schalttransistors (Q4) verbunden sind, sowohl ein zweiter Anschluss des dritten Schalttransistors (Q3) als auch ein zweiter Anschluss des vierten Schalttransistors (Q4) mit einem zweiten Auswahlkontakt des zweiten Relais (RLY2) verbunden sind und ein beweglicher Kontakt des zweiten Relais (RLY2) mit einer Kathode des zweiten Sammelleitungskondensators (C2) verbunden ist.

19. DC/DC-Schaltung (10) der unterbrechungsfreien Stromversorgung nach Anspruch 1,
wobei die erste Auswahleinheit ein Ein-Pol-Ein-Wechsler-Viertrelais (RLY4) umfasst, die zweite Auswahleinheit einen ersten Festkörperschalter (SWITCH1), einen zweiten Festkörperschalter (SWITCH2) und einen dritten Festkörperschalter (SWITCH3) umfasst, die erste Zerhackereinheit einen siebten Schalttransistor (Q7), einen achten Schalttransistor (Q8), einen neunten Schalttransistor (Q9) und einen zehnten Schalttransistor (Q10) umfasst, die zweite Zerhackereinheit einen dritten Schalttransistor (Q3), und einen vierten Schalttransistor (Q4) umfasst, die erste Gleichrichtungseinheit eine elfte Diode (D11), eine zwölfte Diode (D12), eine dreizehnte Diode (D13) und eine vierzehnte Diode (D14) umfasst, die zweite Gleichrichtungseinheit eine dritte Diode (D3), eine vierte Diode (D4), eine fünfte Diode (D5) und eine sechste Diode (D6) umfasst, die bidirektionale DC/DC-Schaltung (10) ferner eine fünfte Filterdrossel (L5), eine zweite Filterdrossel (L2) und eine dritte Filterdrossel (L3) umfasst, die fünfte Filterdrossel (L5) auf der Primärseite des Trenntransformators (T1) angeordnet ist und die zweite Filterdrossel (L2) und die dritte Filterdrossel (L3) auf der Sekundärseite des Trenntransformators (T1) angeordnet sind;
wobei der siebte Schalttransistor (Q7) mit dem neunten Schalttransistor (Q9) in Serie geschaltet ist, der achte Schalttransistor (Q8) mit dem zehnten Schalttransistor (Q10) in Serie geschaltet ist, sowohl die aus dem siebten Schalttransistor (Q7) und dem neunten Schalttransistor (Q9) ausgebildete Serienschaltung als auch die aus dem achten Schalttransistor (Q8) und dem zehnten Schalttransistor (Q10) ausgebildete Serienschaltung parallel zueinander zwischen einen positiven Anschluss und einen negativen Anschluss der Batterie (BAT) geschaltet sind, ein gemeinsamer Knoten zwischen dem achten Schalttransistor (Q8) und dem zehnten Schalttransistor (Q10) mit einem ersten Abgriff auf der Primärseite des Trenntransformators (T1) über das vierte Relais (RLY4) verbunden ist, ein gemeinsamer Knoten zwischen dem siebten Schalttransistor (Q7) und dem neunten Schalttransistor (Q9) mit einem zweiten Abgriff auf der Primärseite des Trenntransformators (T1) verbunden ist, der positive Anschluss der Batterie (BAT) mit einer Kathode der elften Diode (D11) und einer Kathode der zwölften Diode (D12) über die fünfte Filterdrossel (L5) verbunden ist, eine Anode der elften Diode (D11) mit einer Kathode der dreizehnten Diode (D13) verbunden ist, eine Anode der zwölften Diode (D12) mit einer Kathode der vierzehnten Diode (D14) verbunden ist, eine Anode der dreizehnten Diode (D13) und eine Anode der vierzehnten Diode (D14) mit dem negativen Anschluss der Batterie (BAT) verbunden sind, und die Anode der elften Diode (D11) und die Anode der zwölften Diode (D12) jeweils mit dem ersten Abgriff und dem zweiten Abgriff auf der Primärseite des Trenntransformators (T1) verbunden sind; und
wobei die dritte Diode (D3), die vierte Diode (D4), die fünfte Diode (D5) und die sechste Diode (D6) einen Vollbrücke-Gleichrichter ausbilden, zwei Eingangsanschlüsse des Vollbrücke-Gleichrichters jeweils mit einem ersten Abgriff und einem vierten Abgriff auf der Sekundärseite des Trenntransformators (T1) über den ersten Festkörperschalter (SWITCH1) und den dritten Festkörperschalter (SWITCH3) verbunden sind, ein erster Ausgangsanschluss des Vollbrücke-Gleichrichters mit einer Anode eines zweiten Sammelleitungskondensators (C2) über die zweite Filterdrossel (L2) verbunden ist, ein zweiter Ausgangsanschluss des Vollbrücke-Gleichrichters mit einer Kathode eines dritten Sammelleitungskondensators (C3) über die dritte Filterdrossel (L3) verbunden ist, ein erster Anschluss des dritten Schalttransistors (Q3) mit der Anode des zweiten Sammelleitungskondensators (C2) verbunden ist, ein zweiter Anschluss des vierten Schalttransistors (Q4) mit der Kathode des dritten Sammelleitungskondensators (C3) verbunden ist, und sowohl ein zweiter Anschluss des dritten Schalttransistors (Q3) als auch ein erster Anschluss des vierten Schalttransistors (Q4) mit einem zweiten Abgriff auf der Sekundärseite des Trenntransformators (T1) über den zweiten Festkörperschalter (SWITCH2) verbunden ist.

20. DC/DC-Schaltung (10) der unterbrechungsfreien Stromversorgung nach einem der Ansprüche 16 bis 19, wobei die DC/DC-Schaltung (10) ferner einen Stromübertrager (T2) oder einen Hall-Sensor umfasst, angeordnet auf der Primärseite des Trenntransformators (T1), wobei der Stromübertrager (T2) auf einer Wechselstromseite der ersten Gleichrichtungseinheit angeordnet ist und der Hall-Sensor auf der Wechselstromseite oder einer Gleichstromseite der ersten Gleichrichtungseinheit angeordnet ist.

21. Unterbrechungsfreie Stromversorgung, wobei die unterbrechungsfreie Stromversorgung die DC/DC-Schaltung (10) nach einem der Ansprüche 1 bis 20 umfasst.

## Revendications

1. Circuit de courant continu-courant continu (CC-CC) (10) d'une alimentation sans coupure, dans lequel le circuit CC-CC (10) est un circuit continu-continu bidirectionnel, et le circuit CC-CC bidirectionnel (10) raccordé entre une barre omnibus et une batterie (BAT) ;
dans un mode de charge, le circuit CC-CC bidirectionnel (10) obtient de l'énergie en provenance de la barre omnibus et charge la batterie (BAT) ; et dans un mode de décharge, le circuit CC-CC bidirectionnel (10) obtient de l'énergie en provenance de la batterie (BAT) et alimente la barre omnibus en énergie,
dans lequel le circuit CC-CC bidirectionnel (10) comprend :
un transformateur d'isolation (T1) ;
une première unité de sélection, une première unité de hachage et une première unité de redressement disposées sur un côté primaire du transformateur d'isolation (T1) ; et
une seconde unité de sélection, une seconde unité de hachage et une seconde unité de redressement disposées sur un côté secondaire du transformateur d'isolation (T1) ;
et dans lequel, dans le mode de charge, la seconde unité de sélection sélectionne la seconde unité de hachage pour fonctionner et la première unité de sélection sélectionne la première unité de redressement pour fonctionner ; et dans le mode de décharge, la première unité de sélection sélectionne la première unité de hachage pour fonctionner et la seconde unité de sélection sélectionne la seconde unité de redressement pour fonctionner,
dans lequel la première unité de hachage utilisée dans le mode de décharge et la première unité de redressement utilisée dans le mode de charge sont complètement indépendantes et la seconde unité de hachage utilisée dans le mode de charge et la seconde unité de redressement utilisée dans le mode de décharge sont complètement indépendantes et dans lequel le transformateur d'isolation (T1) est partagé dans les modes de charge et de décharge.

2. Circuit CC-CC (10) de l'alimentation sans coupure selon la revendication 1,
dans lequel le côté primaire et/ou le côté secondaire du transformateur d'isolation (T1) comprennent une pluralité de prises réglables, et
dans lequel la première unité de hachage et la première unité de redressement sont raccordées à différentes prises réglables sur le côté primaire du transformateur d'isolation (T1), respectivement, et/ou la seconde unité de hachage et la seconde unité de redressement sont raccordées à différentes prises réglables sur le côté secondaire du transformateur d'isolation (T1), respectivement.

3. Circuit CC-CC (10) de l'alimentation sans coupure selon la revendication 1, dans lequel la première unité de hachage et la seconde unité de hachage sont une unité de hachage symétrique, une unité de hachage en pont complet ou une unité de hachage en demi-pont.

4. Circuit CC-CC (10) de l'alimentation sans coupure selon la revendication 1, dans lequel la première unité de redressement et la seconde unité de redressement sont une unité de redressement en pont complet, une unité de redressement à onde entière, une unité de redressement à doubleur de tension ou une unité de redressement à doubleur de courant.

5. Circuit CC-CC (10) de l'alimentation sans coupure selon la revendication 1, dans lequel la première unité de sélection et la seconde unité de sélection sont un relais (RLY1, RLY2, RLY3, RLY4, RLY1-1, RLY1-2, RLY2-1, RLY2-2) et/ou un commutateur à semi-conducteurs (SWITCH1, SWITCH2, SWITCH3).

6. Circuit CC-CC (10) de l'alimentation sans coupure selon la revendication 5, dans lequel, dans le cas où la première unité de sélection et/ou la seconde unité de sélection sont un relais, le relais comprend au moins un relais unipolaire à une direction, un relais unipolaire à deux directions ou un relais bipolaire à deux directions.

7. Circuit CC-CC (10) de l'alimentation sans coupure selon la revendication 1, dans lequel le circuit CC-CC bidirectionnel (10) comprend en outre un transformateur de courant (T2) ou un capteur à effet Hall disposé sur le côté primaire et/ou le côté secondaire du transformateur d'isolation (T1), le transformateur de courant ou le capteur à effet Hall est configuré pour échantillonner un courant sur le côté primaire et/ou le côté secondaire du transformateur d'isolation (T1).

8. Circuit CC-CC (10) de l'alimentation sans coupure selon la revendication 1, dans lequel le circuit CC-CC bidirectionnel (10) comprend en outre des bobines d'induction de filtrage (L1, L2, L3, L4, L5) disposées sur le côté primaire et le côté secondaire du transformateur d'isolation (T1).

9. Circuit CC-CC (10) de l'alimentation sans coupure selon la revendication 1, dans lequel la première unité de sélection comprend un premier relais unipolaire à une direction (RLY1), la seconde unité de sélection comprend un second relais unipolaire à deux directions (RLY2), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3) et une quatrième diode (D4) et le circuit CC-CC bidirectionnel (10) comprend en outre une première bobine d'induction de filtrage (L1) disposée sur le côté primaire du transformateur d'isolation (T1) et une deuxième bobine d'induction de filtrage (L2) disposée sur le côté secondaire du transformateur d'isolation (T1), et
dans lequel une borne positive de la batterie (BAT) est raccordée à une deuxième prise, qui est une prise centrale, sur le côté primaire du transformateur d'isolation (T1), une borne négative de la batterie (BAT) est raccordée à une seconde borne du premier transistor de commutation (Q1) et à une seconde borne du deuxième transistor de commutation (Q2) par le biais du premier relais (RLY1), une première borne du premier transistor de commutation (Q1) et une première borne du deuxième transistor de commutation (Q2) sont respectivement raccordées à une première prise, qui est une borne marquée, et à une troisième prise, qui est une borne non marquée, sur le côté primaire du transformateur d'isolation (T1), la première prise et la troisième prise sur le côté primaire du transformateur d'isolation (T1) sont raccordées à une cathode de la première diode (D1) et à une cathode de la deuxième diode (D2), respectivement, et à la fois une anode de la première diode (D1) et une anode de la deuxième diode (D2) sont raccordées à la borne négative de la batterie (BAT) par le biais de la première bobine d'induction de filtrage (L1) ; une troisième prise, qui est une prise centrale, sur le côté secondaire du transformateur d'isolation (T1) est raccordée à une barre omnibus positive, une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à un premier contact de sélection du deuxième relais (RLY2) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à un second contact de sélection du deuxième relais (RLY2) et un contact mobile du deuxième relais (RLY2) est raccordé à une barre omnibus négative.

10. Circuit CC-CC (10) de l'alimentation sans coupure selon la revendication 1, dans lequel la première unité de sélection comprend un premier relais unipolaire à une direction (RLY1-1) et un troisième relais (RLY1-2), la seconde unité de sélection comprend un second relais unipolaire à deux directions (RLY2), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3) et une quatrième diode (D4) et le circuit CC-CC bidirectionnel (10) comprend en outre une première bobine d'induction de filtrage (L1) disposée sur le côté primaire du transformateur d'isolation (T1) et une deuxième bobine d'induction de filtrage (L2) disposée sur le côté secondaire du transformateur d'isolation (T1), et
dans lequel une borne positive de la batterie (BAT) est raccordée à une deuxième prise, qui est une prise centrale, sur le côté primaire du transformateur d'isolation (T1), une borne négative de la batterie (BAT) est raccordée à une seconde borne du premier transistor de commutation (Q1) et à une seconde borne du deuxième transistor de commutation (Q2), une première borne du premier transistor de commutation (Q1) est raccordée à une première prise, qui est une borne marquée, sur le côté primaire du transformateur d'isolation (T1) par le biais du premier relais (RLY1-1), une première borne du deuxième transistor de commutation (Q2) est raccordée à une troisième prise, qui est une borne non marquée, sur le côté primaire du transformateur d'isolation (T1) par le biais du troisième relais (RLY1-2), la première prise et la troisième prise sur le côté primaire du transformateur d'isolation (T1) sont raccordées à une cathode de la première diode (D1) et à une cathode de la deuxième diode (D2), respectivement, et à la fois une anode de la première diode (D1) et une anode de la deuxième diode (D2) sont raccordées à la borne négative de la batterie (BAT) par le biais de la première bobine d'induction de filtrage (L1) ; et une troisième prise, qui est une prise centrale, sur le côté secondaire du transformateur d'isolation (T1) est raccordée à une barre omnibus positive, une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à un premier contact de sélection du deuxième relais (RLY1-2) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à un second contact de sélection du deuxième relais (RLY2) et un contact mobile du deuxième relais (RLY2) est raccordé à une barre omnibus négative.

11. Circuit CC-CC (10) de l'alimentation sans coupure selon la revendication 1, dans lequel la première unité de sélection comprend un premier relais unipolaire à une direction (RLY1), la seconde unité de sélection comprend un premier commutateur à semi-conducteurs (SWITCH1), un deuxième commutateur à semi-conducteurs (SWITCH2) et un troisième commutateur à semi-conducteurs (SWITCH3), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3), une quatrième diode (D4), une cinquième diode (D5) et une sixième diode (D6), le circuit CC-CC bidirectionnel (10) comprend en outre une première bobine d'induction de filtrage (L1), une deuxième bobine d'induction de filtrage (L2) et une troisième bobine d'induction de filtrage (L3), la première bobine d'induction de filtrage (L1) est disposée sur le côté primaire du transformateur d'isolation (T1) et la deuxième bobine d'induction de filtrage (L2) et la troisième bobine d'induction de filtrage (L3) sont disposées sur le côté secondaire du transformateur d'isolation (T1) ;
dans lequel une borne positive de la batterie (BAT) est raccordée à une deuxième prise, qui est une prise centrale, sur le côté primaire du transformateur d'isolation (T1), une borne négative de la batterie (BAT) est raccordée à une seconde borne du premier transistor de commutation (Q1) et à une seconde borne du deuxième transistor de commutation (Q2) par le biais du premier relais (RLY1), une première borne du premier transistor de commutation (Q1) et une première borne du deuxième transistor de commutation (Q2) sont raccordées à une première prise, qui est une borne marquée, et à une troisième prise, qui est une borne non marquée, sur le côté primaire du transformateur d'isolation (T1), respectivement, la première prise et la troisième prise sur le côté primaire du transformateur d'isolation (T1) sont raccordées à une cathode de la première diode (D1) et à une cathode de la deuxième diode (D2), respectivement, et à la fois une anode de la première diode (D1) et une anode de la deuxième diode (D2) sont raccordées à la borne négative de la batterie (BAT) par le biais de la première bobine d'induction de filtrage (L1) ; et
dans lequel la troisième diode (D3), la quatrième diode (D4), la cinquième diode (D5) et la sixième diode (D6) forment un redresseur en pont complet, deux bornes d'entrée du redresseur en pont complet sont raccordées à une première prise et à une quatrième prise sur le côté secondaire du transformateur d'isolation (T1), respectivement, par le biais des premier et troisième commutateurs à semi-conducteurs (SWITCH1, SWITCH3), une première borne de sortie du redresseur en pont complet est raccordée à une anode d'un deuxième condensateur de barre omnibus (C2) par le biais de la deuxième bobine d'induction de filtrage (L2), une seconde borne de sortie du redresseur en pont complet est raccordée à une cathode d'un troisième condensateur de barre omnibus (C3) par le biais de la troisième bobine d'induction de filtrage (L3), une première borne du troisième transistor de commutation (Q3) est raccordée à l'anode du deuxième condensateur de barre omnibus (C2), une seconde borne du quatrième transistor de commutation (Q4) est raccordée à la cathode du troisième condensateur de barre omnibus (C3), à la fois une seconde borne du troisième transistor de commutation (Q3) et une première borne du quatrième transistor de commutation (Q4) sont raccordées à une deuxième prise sur le côté secondaire du transformateur d'isolation (T1) par le biais du deuxième commutateur à semi-conducteurs (SWITCH2).

12. Circuit CC-CC (10) de l'alimentation sans coupure selon la revendication 1, dans lequel la première unité de sélection comprend un premier relais unipolaire à une direction (RLY1-1) et un troisième relais (RLY1-2), la seconde unité de sélection comprend un deuxième relais unipolaire à deux directions (RLY2), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3) et une quatrième diode (D4) et le circuit CC-CC bidirectionnel (10) comprend en outre une première bobine d'induction de filtrage (L1) disposée sur le côté primaire du transformateur d'isolation (T1) et une deuxième bobine d'induction de filtrage (L2) disposée sur le côté secondaire du transformateur d'isolation (T1) ;
dans lequel une borne positive de la batterie (BAT) est raccordée à une deuxième prise, qui est une prise centrale, sur le côté primaire du transformateur d'isolation (T1), une borne négative de la batterie (BAT) est raccordée à une seconde borne du premier transistor de commutation (Q1) et à une seconde borne du deuxième transistor de commutation (Q2), une première borne du premier transistor de commutation (Q1) est raccordée à une cathode de la première diode (D1) par le biais du premier relais (RLY1-1), une première borne du deuxième transistor de commutation (Q2) est raccordée à une cathode de la deuxième diode (D2) par le biais du troisième relais (RLY1-2), une première prise et une troisième prise sur le côté primaire du transformateur d'isolation (T1) sont raccordées à la cathode de la première diode (D1) et à la cathode de la deuxième diode (D2), respectivement, et à la fois une anode de la première diode (D1) et une anode de la deuxième diode (D2) sont raccordées à la borne négative de la batterie (BAT) par le biais de la première bobine d'induction de filtrage (L1) ; et
dans lequel une troisième prise, qui est une prise centrale, sur le côté secondaire du transformateur d'isolation (T1) est raccordée à une anode d'un deuxième condensateur de barre omnibus (C2), une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à un premier contact de sélection du deuxième relais (RLY2) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à un second contact de sélection du deuxième relais (RLY2), et un contact mobile du deuxième relais (RLY2) est raccordé à une cathode du deuxième condensateur de barre omnibus (C2).

13. Circuit CC-CC (10) de l'alimentation sans coupure selon la revendication 1, dans lequel la première unité de sélection comprend un premier relais unipolaire à une direction (RLY1-1) et un troisième relais (RLY1-2), la seconde unité de sélection comprend un quatrième relais unipolaire à une direction (RLY2-1) et un cinquième relais (RLY2-1), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3) et une quatrième diode (D4) et le circuit CC-CC bidirectionnel (10) comprend en outre une première bobine d'induction de filtrage (L1) disposée sur le côté primaire du transformateur d'isolation (T1) et une deuxième bobine d'induction de filtrage (L2) disposée sur le côté secondaire du transformateur d'isolation (T1) ;
dans lequel une borne positive de la batterie (BAT) est raccordée à une deuxième prise, qui est une prise centrale, sur le côté primaire du transformateur d'isolation (T1), une borne négative de la batterie (BAT) est raccordée à une seconde borne du premier transistor de commutation (Q1) et à une seconde borne du deuxième transistor de commutation (Q2), une première borne du premier transistor de commutation (Q1) est raccordée à une cathode de la première diode (D1) par le biais du premier relais (RLY1-1), une première borne du deuxième transistor de commutation (Q2) est raccordée à une cathode de la deuxième diode (D2) par le biais du troisième relais (RLY1-2), une première prise et une troisième prise sur le côté primaire du transformateur d'isolation (T1) sont raccordées à la cathode de la première diode (D1) et à la cathode de la deuxième diode (D2), respectivement, et à la fois une anode de la première diode (D1) et une anode de la deuxième diode (D2) sont raccordées à la borne négative de la batterie (BAT) par le biais de la première bobine d'induction de filtrage (L1) ; et
dans lequel une troisième prise, qui est une prise centrale, sur le côté secondaire du transformateur d'isolation (T1) est raccordée à une anode d'un deuxième condensateur de barre omnibus (C2), une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à une première borne du quatrième relais (RLY2-1) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à une première borne du cinquième relais (RLY2-2), et à la fois une seconde borne du quatrième relais (RLY2-1) et une seconde borne du cinquième relais (RLY2-2) sont raccordées à une cathode du deuxième condensateur de barre omnibus (C2).

14. Circuit CC-CC (10) de l'alimentation sans coupure selon la revendication 1, dans lequel la première unité de sélection comprend un premier relais unipolaire à une direction (RLY1-1) et un troisième relais (RLY1-2), la seconde unité de sélection comprend un sixième relais de type unipolaire à une direction (RLY2), la première unité de hachage comprend un premier transistor de commutation (Q1) et un deuxième transistor de commutation (Q2), la seconde unité de hachage comprend un troisième transistor de commutation (Q3) et un quatrième transistor de commutation (Q4), la première unité de redressement comprend une première diode (D1) et une deuxième diode (D2), la seconde unité de redressement comprend une troisième diode (D3), une quatrième diode (D4), une cinquième diode (D5) et une sixième diode (D6), le circuit CC-CC bidirectionnel (10) comprend en outre une première bobine d'induction de filtrage (L1), une deuxième bobine d'induction de filtrage (L2) et une troisième bobine d'induction de filtrage (L3), la première bobine d'induction de filtrage (L1) est disposée sur le côté primaire du transformateur d'isolation (T1) et la deuxième bobine d'induction de filtrage (L2) et la troisième bobine d'induction de filtrage (L3) sont disposées sur le côté secondaire du transformateur d'isolation (T1) ;
dans lequel une borne négative de la batterie (BAT) est raccordée à une seconde borne du premier transistor de commutation (Q1) et à une seconde borne du deuxième transistor de commutation (Q2) par le biais du premier relais (RLY1-1), une première borne du premier transistor de commutation (Q1) et une première borne du deuxième transistor de commutation (Q2) sont raccordées à une deuxième prise et à une quatrième prise sur le côté primaire du transformateur d'isolation (T1), respectivement, la borne négative de la batterie (BAT) est raccordée à une anode de la première diode (D1) et à une anode de la deuxième diode (D2) par le biais d'un circuit série composé du troisième relais (RLY1-2) et de la première bobine d'induction de filtrage (L1), et une première prise et une cinquième prise sur le côté primaire du transformateur d'isolation (T1) sont raccordées à une cathode de la première diode (D1) et à une cathode de la deuxième diode (D2), respectivement ; et
dans lequel la troisième diode (D3), la quatrième diode (D4), la cinquième diode (D5) et la sixième diode (D6) forment un redresseur de diode en pont complet, deux bornes d'entrée du redresseur de diode en pont complet sont raccordées à une première prise et à une troisième prise sur le côté secondaire du transformateur d'isolation (T1), respectivement, une première borne de sortie du redresseur de diode en pont complet est raccordée à une anode d'un deuxième condensateur de barre omnibus (C2) par le biais de la deuxième bobine d'induction de filtrage (L2), une seconde borne de sortie du redresseur de diode en pont complet est raccordée à une cathode d'un troisième condensateur de barre omnibus (C3) par le biais de la troisième bobine d'induction de filtrage (L3), une première borne du troisième transistor de commutation (Q3) est raccordée à l'anode du deuxième condensateur de barre omnibus (C2), une seconde borne du quatrième transistor de commutation (Q4) est raccordée à la cathode du troisième condensateur de barre omnibus (C3), et à la fois une seconde borne du troisième transistor de commutation (Q3) et une première borne du quatrième transistor de commutation (Q4) sont raccordées à une première prise sur le côté secondaire du transformateur d'isolation (T1) par le biais du sixième relais (RLY2).

15. Circuit CC-CC (10) de l'alimentation sans coupure selon l'une quelconque des revendications 9 à 14, dans lequel le circuit CC-CC (10) comprend en outre un transformateur de courant (T2) ou un capteur à effet Hall disposé sur le côté primaire du transformateur d'isolation (T1),
dans le cas où le circuit CC-CC (10) comprend le transformateur de courant (T2), le raccordement du transformateur d'isolation (T1) à la cathode de la première diode (D1) et à la cathode de la deuxième diode (D2) est mis en oeuvre en raccordant le transformateur d'isolation (T1) à la cathode de la premier diode (D1) et à la cathode de la deuxième diode (D2) par le biais du transformateur de courant ; et
dans le cas où le circuit CC-CC (10) comprend le transformateur de courant (T2), le capteur à effet Hall est disposé côté CC ou côté CA de la première unité de redressement.

16. Circuit CC-CC (10) de l'alimentation sans coupure selon la revendication 1, dans lequel la première unité de sélection comprend un troisième relais unipolaire à une direction (RLY3), la seconde unité de sélection comprend un deuxième relais unipolaire à deux directions (RLY2), la première unité de hachage comprend un cinquième transistor de commutation (Q5) et un sixième transistor de commutation (Q6), la seconde unité de hachage comprend un troisième transistor de commutation (Q3) et un quatrième transistor de commutation (Q4), la première unité de redressement comprend une septième diode (D7), une huitième diode (D8), une neuvième diode (D9) et une dixième diode (D10), la seconde unité de redressement comprend une troisième diode (D3) et une quatrième diode (D4) et le circuit CC-CC bidirectionnel (10) comprend en outre une quatrième bobine d'induction de filtrage (L4) disposée sur le côté primaire du transformateur d'isolation (T1) et une deuxième bobine d'induction de filtrage (L2) disposée sur le côté secondaire du transformateur d'isolation (T1) ;
dans lequel le cinquième transistor de commutation (Q5) et le sixième transistor de commutation (Q6) raccordés en série sont raccordés entre une borne positive et une borne négative de la batterie (BAT), un noeud commun entre le cinquième transistor de commutation (Q5) et le sixième transistor de commutation (Q6) est raccordé à une première prise sur le côté primaire du transformateur d'isolation (T1), la borne positive de la batterie (BAT) est raccordée à une cathode de la septième diode (D7) et à une cathode de la huitième diode (D8) par le biais de la quatrième bobine d'induction de filtrage (L4), une anode de la septième diode (D7) est raccordée à une cathode de la neuvième diode (D9), une anode de la huitième diode (D8) est raccordée à une cathode de la dixième diode (D10), une anode de la neuvième diode (D9) et une anode de la dixième diode (D10) sont raccordées à la borne négative de la batterie (BAT), l'anode de la septième diode (D7) et l'anode de la huitième diode (D8) sont raccordées à la première prise et à une deuxième prise sur le côté primaire du transformateur d'isolation (T1), respectivement, un circuit série composé d'un quatrième condensateur de stabilisation de tension (C4) et d'un cinquième condensateur de stabilisation de tension (C5) est raccordé en parallèle aux deux bornes du cinquième transistor de commutation (Q5) et du sixième transistor de commutation (Q6) et un noeud commun entre le quatrième condensateur de stabilisation de tension (C4) et le cinquième condensateur de stabilisation de tension (C5) est raccordé à la deuxième prise sur le côté primaire du transformateur d'isolation (T1) par le biais du troisième relais (RLY3) ; et
dans lequel une troisième prise, qui est une prise centrale, sur le côté secondaire du transformateur d'isolation (T1) est raccordée à une anode d'un deuxième condensateur de barre omnibus (C2), une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à un premier contact de sélection du deuxième relais (RLY2) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à un second contact de sélection du deuxième relais (RLY2), et un contact mobile du deuxième relais (RLY2) est raccordé à une cathode du deuxième condensateur de barre omnibus (C2).

17. Circuit CC-CC (10) de l'alimentation sans coupure selon la revendication 1, dans lequel la première unité de sélection comprend un troisième relais unipolaire à une direction (RLY3), la seconde unité de sélection comprend un premier commutateur à semi-conducteurs (SWITCH1), un deuxième commutateur à semi-conducteurs (SWITCH2) et un troisième commutateur à semi-conducteurs (SWITCH3), la première unité de hachage comprend un cinquième transistor de commutation (Q5) et un sixième transistor de commutation (Q6), la seconde unité de hachage comprend un troisième transistor de commutation (Q3) et un quatrième transistor de commutation (Q4), la première unité de redressement comprend une septième diode (D7), une huitième diode (D8), une neuvième diode (D9) et une dixième diode (D10), la seconde unité de redressement comprend une troisième diode (D3), une quatrième diode (D4), une cinquième diode (D5) et une sixième diode (D6), le circuit CC-CC bidirectionnel (10) comprend en outre une quatrième bobine d'induction de filtrage (L4), une deuxième bobine d'induction de filtrage (L2) et une troisième bobine d'induction de filtrage (L3), la quatrième bobine d'induction de filtrage (L4) est disposée sur le côté primaire du transformateur d'isolation (T1) et la deuxième bobine d'induction de filtrage (L2) et la troisième bobine d'induction de filtrage (L3) sont disposées sur le côté secondaire du transformateur d'isolation (T1) ;
dans lequel le cinquième transistor de commutation (Q5) et le sixième transistor de commutation (Q6) raccordés en série sont raccordés entre une borne positive et une borne négative de la batterie (BAT), un noeud commun entre le cinquième transistor de commutation (Q5) et le sixième transistor de commutation (Q6) est raccordé à une première prise sur le côté primaire du transformateur d'isolation (T1), la borne positive de la batterie (BAT) est raccordée à une cathode de la septième diode (D7) et à une cathode de la huitième diode (D8) par le biais de la quatrième bobine d'induction de filtrage (L4), une anode de la septième diode (D7) est raccordée à une cathode de la neuvième diode (D9), une anode de la huitième diode (D8) est raccordée à une cathode de la dixième diode (D10), une anode de la neuvième diode (D9) et une anode de la dixième diode (D10) sont raccordées à la borne négative de la batterie (BAT), l'anode de la septième diode (D7) et l'anode de la huitième diode (D8) sont également raccordées à la première prise et à une deuxième prise sur le côté primaire du transformateur d'isolation (T1), respectivement, un circuit série composé d'un quatrième condensateur de stabilisation de tension (C4) et d'un cinquième condensateur de stabilisation de tension (C5) est raccordé en parallèle aux deux bornes du cinquième transistor de commutation (Q5) et du sixième transistor de commutation (Q6) et un noeud commun entre le quatrième condensateur de stabilisation de tension (C4) et le cinquième condensateur de stabilisation de tension (C5) est raccordé à la deuxième prise sur le côté primaire du transformateur d'isolation (T1) par le biais du troisième relais (RLY3) ; et
dans lequel la troisième diode (D3), la quatrième diode (D4), la cinquième diode (D5) et la sixième diode (D6) forment un redresseur en pont complet, deux bornes d'entrée du redresseur en pont complet sont raccordées à une première prise et à une quatrième prise sur le côté secondaire du transformateur d'isolation (T1), respectivement, par le biais du premier commutateur à semi-conducteurs (SWITCH1) et du troisième commutateur à semi-conducteurs (SWITCH3), une première borne de sortie du redresseur en pont complet est raccordée à une anode d'un deuxième condensateur de barre omnibus (C2) par le biais de la deuxième bobine d'induction de filtrage (L2), une seconde borne de sortie du redresseur en pont complet est raccordée à une cathode d'un troisième condensateur de barre omnibus (C3) par le biais de la troisième bobine d'induction de filtrage (L3), une première borne du troisième transistor de commutation (Q3) est raccordée à l'anode du deuxième condensateur de barre omnibus (C2), une seconde borne du quatrième transistor de commutation (Q4) est raccordée à la cathode du troisième condensateur de barre omnibus (C3), et à la fois une seconde borne du troisième transistor de commutation (Q3) et une première borne du quatrième transistor de commutation (Q4) sont raccordées à une deuxième prise sur le côté secondaire du transformateur d'isolation (T1) par le biais du deuxième commutateur à semi-conducteurs (SWITCH2).

18. Circuit CC-CC (10) de l'alimentation sans coupure selon la revendication 1, dans lequel la première unité de sélection comprend un quatrième relais unipolaire à une direction (RLY4), la seconde unité de sélection comprend un deuxième relais unipolaire à deux directions (RLY2), la première unité de hachage comprend un septième transistor de commutation (Q7), huitième transistor de commutation (Q8), un neuvième transistor de commutation (Q9) et un dixième transistor de commutation (Q10), la seconde unité de hachage comprend un troisième transistor de commutation (Q3) et un quatrième transistor de commutation (Q4), la première unité de redressement comprend une onzième diode (D11), une douzième diode (D12), une treizième diode (D13) et une quatorzième diode (D14), la seconde unité de redressement comprend une troisième diode (D3) et une quatrième diode (D4), et le circuit CC-CC bidirectionnel (10) comprend en outre une cinquième bobine d'induction de filtrage (L5) disposée sur le côté primaire du transformateur d'isolation (T1) et une deuxième bobine d'induction de filtrage (L2) disposée sur le côté secondaire du transformateur d'isolation (T1) ;
dans lequel le septième transistor de commutation (Q7) est raccordé en série au neuvième transistor de commutation (Q9), le huitième transistor de commutation (Q8) est raccordé en série au dixième transistor de commutation (Q10), à la fois le circuit série composé du septième transistor de commutation (Q7) et du neuvième transistor de commutation (Q9) et le circuit série composé du huitième transistor de commutation (Q8) et du dixième transistor de commutation (Q10) sont raccordés en parallèle l'un avec l'autre entre une borne positive et une borne négative de la batterie (BAT), un noeud commun entre le huitième transistor de commutation (Q8) et le dixième transistor de commutation (Q10) est raccordé à une première prise sur le côté primaire du transformateur d'isolation (T1) par le biais du quatrième relais (RLY4), un noeud commun entre le septième transistor de commutation (Q7) et le neuvième transistor de commutation (Q9) est raccordé à une deuxième prise sur le côté primaire du transformateur d'isolation (T1), la borne positive de la batterie (BAT) est raccordée à une cathode de la onzième diode (D11) et à une cathode de la douzième diode (D12) par le biais de la cinquième bobine d'induction de filtrage (L5), une anode de la onzième diode (D11) est raccordée à une cathode de la treizième diode (D13), une anode de la douzième diode (D12) est raccordée à une cathode de la quatorzième diode (D14), une anode de la treizième diode (D13) et une anode de la quatorzième diode (D14) sont raccordées à la borne négative de la batterie (BAT), et l'anode de la onzième diode (D11) et l'anode de la douzième diode (D12) sont raccordées à la première prise et à la deuxième prise sur le côté primaire du transformateur d'isolation (T1), respectivement ; et
dans lequel une troisième prise, qui est une prise centrale, sur le côté secondaire du transformateur d'isolation (T1) est raccordée à une anode d'un deuxième condensateur de barre omnibus (C2), une première prise et une cinquième prise sur le côté secondaire du transformateur d'isolation (T1) sont raccordées à une cathode de la troisième diode (D3) et à une cathode de la quatrième diode (D4), respectivement, à la fois une anode de la troisième diode (D3) et une anode de la quatrième diode (D4) sont raccordées à un premier contact de sélection du deuxième relais (RLY2) par le biais de la deuxième bobine d'induction de filtrage (L2), une deuxième prise et une quatrième prise sur le côté secondaire du transformateur d'isolation (T1) sont raccordées à une première borne du troisième transistor de commutation (Q3) et à une première borne du quatrième transistor de commutation (Q4), respectivement, à la fois une seconde borne du troisième transistor de commutation (Q3) et une seconde borne du quatrième transistor de commutation (Q4) sont raccordées à un second contact de sélection du deuxième relais (RLY2), et un contact mobile du deuxième relais (RLY2) est raccordé à une cathode du deuxième condensateur de barre omnibus (C2).

19. Circuit CC-CC (10) de l'alimentation sans coupure selon la revendication 1, dans lequel la première unité de sélection comprend un quatrième relais unipolaire à une direction (RLY4), la seconde unité de sélection comprend un premier commutateur à semi-conducteurs (SWITCH1), un deuxième commutateur à semi-conducteurs (SWITCH2) et un troisième commutateur à semi-conducteurs (SWITCH3), la première unité de hachage comprend un septième transistor de commutation (Q7), un huitième transistor de commutation (Q8), un neuvième transistor de commutation (Q9) et un dixième transistor de commutation (Q10), la seconde unité de hachage comprend un troisième transistor de commutation (Q3) et un quatrième transistor de commutation (Q4), la première unité de redressement comprend une onzième diode (D11), une douzième diode (D12), une treizième diode (D13) et une quatorzième diode (D14), la seconde unité de redressement comprend une troisième diode (D3), une quatrième diode (D4), une cinquième diode (D5) et une sixième diode (D6), le circuit CC-CC bidirectionnel (10) comprend en outre une cinquième bobine d'induction de filtrage (L5), une deuxième bobine d'induction de filtrage (L2) et une troisième bobine d'induction de filtrage (L3), la cinquième bobine d'induction de filtrage (L5) est disposée sur le côté primaire du transformateur d'isolation (T1) et la deuxième bobine d'induction de filtrage (L2) et la troisième bobine d'induction de filtrage (L3) sont disposées sur le côté secondaire du transformateur d'isolation (T1) ;
dans lequel le septième transistor de commutation (Q7) est raccordé en série au neuvième transistor de commutation (Q9), le huitième transistor de commutation (Q8) est raccordé en série au dixième transistor de commutation (Q10), à la fois le circuit série composé du septième transistor de commutation (Q7) et du neuvième transistor de commutation (Q9) et le circuit série composé du huitième transistor de commutation (Q8) et du dixième transistor de commutation (Q10) sont raccordés en parallèle l'un avec l'autre entre une borne positive et une borne négative de la batterie (BAT), un noeud commun entre le huitième transistor de commutation (Q8) et le dixième transistor de commutation (Q10) est raccordé à une première prise sur le côté primaire du transformateur d'isolation (T1) par le biais du quatrième relais (RLY4), un noeud commun entre le septième transistor de commutation (Q7) et le neuvième transistor de commutation (Q9) est raccordé à une deuxième prise sur le côté primaire du transformateur d'isolation (T1), la borne positive de la batterie (BAT) est raccordée à une cathode de la onzième diode (D11) et à une cathode de la douzième diode (D12) par le biais de la cinquième bobine d'induction de filtrage (L5), une anode de la onzième diode (D11) est raccordée à une cathode de la treizième diode (D13), une anode de la douzième diode (D12) est raccordée à une cathode de la quatorzième diode (D14), une anode de la treizième diode (D13) et une anode de la quatorzième diode (D14) sont raccordées à la borne négative de la batterie (BAT), et l'anode de la onzième diode (D11) et l'anode de la douzième diode (D12) sont raccordées à la première prise et à la deuxième prise sur le côté primaire du transformateur d'isolation (T1), respectivement ; et
dans lequel la troisième diode (D3), la quatrième diode (D4), la cinquième diode (D5) et la sixième diode (D6) forment un redresseur en pont complet, deux bornes d'entrée du redresseur en pont complet sont raccordées à une première prise et à une quatrième prise sur le côté secondaire du transformateur d'isolation (T1), respectivement, par le biais du premier commutateur à semi-conducteurs (SWITCH1) et du troisième commutateur à semi-conducteurs (SWITCH3), une première borne de sortie du redresseur en pont complet est raccordée à une anode d'un deuxième condensateur de barre omnibus (C2) par le biais de la deuxième bobine d'induction de filtrage (L2), une seconde borne de sortie du redresseur en pont complet est raccordée à une cathode d'un troisième condensateur de barre omnibus (C3) par le biais de la troisième bobine d'induction de filtrage (L3), une première borne du troisième transistor de commutation (Q3) est raccordée à l'anode du deuxième condensateur de barre omnibus (C2), une seconde borne du quatrième transistor de commutation (Q4) est raccordée à la cathode du troisième condensateur de barre omnibus (C3), et à la fois une seconde borne du troisième transistor de commutation (Q3) et une première borne du quatrième transistor de commutation (Q4) sont raccordées à une deuxième prise sur le côté secondaire du transformateur d'isolation (T1) par le biais du deuxième commutateur à semi-conducteurs (SWITCH2).

20. Circuit CC-CC (10) de l'alimentation sans coupure selon l'une quelconque des revendications 16 à 19, dans lequel le circuit CC-CC (10) comprend en outre un transformateur de courant (T2) ou un capteur à effet Hall disposé sur le côté primaire du transformateur d'isolation (T1), le transformateur de courant (T2) est disposé côté CA de la première unité de redressement et le capteur à effet Hall est disposé côté CA ou côté CC de la première unité de redressement.

21. Alimentation sans coupure, dans laquelle l'alimentation sans coupure comprend le circuit CC-CC (10) selon l'une quelconque des revendications 1 à 20.
